# EUROPÄISCHE PATENTSCHRIFT

(11) **EP 2 451 744 B1**
(45) Veröffentlichungstag und Bekanntmachung des Hinweises auf die Patenterteilung: **13.03.2013**
(21) Anmeldenummer: 09748699.7
(22) Anmeldetag: 06.10.2009
(51) Int. Cl.: F27B 7/00, F27B 7/06, C01B 31/08, B01J 20/20, C01B 31/10

(54) **ANLAGE UND VERFAHREN ZUR HERSTELLUNG VON AKTIVKOHLE**
INSTALLATION AND METHOD FOR PRODUCING ACTIVE CARBON
INSTALLATION ET PROCÉDÉ DE PRODUCTION DE CHARBON ACTIF

(30) Priorität: 10.07.2009 DE 102009032810
(43) Veröffentlichungstag der Anmeldung: 16.05.2012
(73) Patentinhaber: Blücher GmbH, 40699 Erkrath (DE)
(72) Erfinder: VON BLÜCHER, Hasso, 40699 Erkrath (DE); SCHÖNFELD, Raik, 30629 Hannover (DE)
(74) Vertreter: Von Rohr
(86) Internationale Anmeldenummer: PCT/EP2009/007172
(87) Internationale Veröffentlichungsnummer: WO 2011/003434

(56) Entgegenhaltungen:
- WO-A1-2005/016819
- WO-A1-2007/119698
- US-A- 4 115 317
- US-A1- 2007 254 807
- US-A1- 2009 142 252

## Beschreibung

Die vorliegende Erfindung betrifft das technische Gebiet der Herstellung von Aktivkohle.

Insbesondere betrifft die vorliegende Erfindung eine Vorrichtung bzw. Anlage sowie ein Verfahren zur Herstellung von Aktivkohle, insbesondere durch Carbonisierung und nachfolgende Aktivierung geeigneter polymerer Ausgangsmaterialien, wie sulfonierter Polymere.

Aktivkohle ist aufgrund ihrer recht unspezifischen adsorptiven Eigenschaften das am meisten angewandte Adsorbens. Gesetzliche Auflagen, aber auch das steigende Bewußtsein der Verantwortung für die Umwelt, führen zu einem steigenden Bedarf an Aktivkohle.

Aktivkohle wird im allgemeinen durch Carbonisierung (synonym auch als "Schwelung", "Pyrolyse" oder dergleichen bezeichnet) und nachfolgende Aktivierung geeigneter kohlenstoffhaltiger Verbindungen bzw. Edukte (Ausgangsmaterialien) erhalten, wobei im allgemeinen solche Ausgangsverbindungen bevorzugt werden, die zu ökonomisch vernünftigen Ausbeuten führen; denn die Gewichtsverluste durch Abspalten flüchtiger Bestandteile beim Schwelen und durch den Abbrand beim Aktivieren sind erheblich. Für weitergehende Einzelheiten der Aktivkohleherstellung kann beispielsweise verwiesen werden auf H. v. Kienle und E. Bäder, Aktivkohle und ihre industrielle Anwendung, Enke Verlag Stuttgart, 1980.

Bei der Schwelung - synonym auch als "Carbonisierung" oder "Pyrolyse" bezeichnet - erfolgt die Umwandlung des kohlenstoffhaltigen Ausgangsmaterials zu Kohlenstoff, d. h. mit anderen Worten wird das Ausgangsmaterial verkohlt. Bei der Schwelung der zuvor genannten polymeren, insbesondere sulfonierten organischen Ausgangsmaterialien werden - unter Abspaltung flüchtiger Bestandteile wie insbesondere SO₂ - die funktionellen chemischen Gruppen, insbesondere Sulfonsäuregruppen, zerstört, und es bilden sich freie Radikale, die eine starke Vernetzung bewirken - ohne die es ja keinen Pyrolyserückstand (= Kohlenstoff) gäbe.

Das Grundprinzip der der Carbonisierung nachfolgenden Aktivierung dagegen besteht darin, einen Teil des bei der Carbonisierung generierten Kohlenstoffs selektiv und gezielt unter geeigneten Bedingungen abzubauen. Hierdurch entstehen zahlreiche Poren, Spalten und Risse, und die auf die Masseneinheit bezogene Oberfläche nimmt erheblich zu. Bei der Aktivierung wird also ein gezielter Abbrand des zuvor carbonisierten Materials vorgenommen. Da bei der Aktivierung Kohlenstoff abgebaut wird, tritt bei diesem Vorgang ein zum Teil erheblicher Substanzverlust ein, welcher unter optimalen Bedingungen gleichbedeutend mit einer Erhöhung der Porosität und einer Zunahme der inneren Oberfläche und des Porenvolumens ist. Die Aktivierung erfolgt daher unter selektiven bzw. kontrollierten, im allgemeinen oxidierenden Bedingungen.

Aber auch die Beschaffenheit der erzeugten Aktivkohle - fein- oder grobporig, fest oder brüchig - hängt vom Ausgangsmaterial ab. Übliche Ausgangsmaterialien sind Kokosnußschalen, Holzabfälle, Torf, Steinkohle, Peche, aber auch besondere Kunststoffe, die unter anderem bei der Herstellung von Aktivkohlegeweben eine gewisse Rolle spielen.

Aktivkohle wird in verschiedenen Formen verwendet: Pulverkohle, Splitterkohle, Kornkohle, Formkohle und seit Ende der siebziger Jahre auch kugelförmige Aktivkohle ("Kugelkohle"). Kugelförmige Aktivkohle hat gegenüber anderen Formen von Aktivkohle wie Pulver-, Splitter-, Kornkohle und dergleichen eine Reihe von Vorteilen, die sie für bestimmte Applikationen wertvoll oder sogar unverzichtbar macht: Sie ist rieselfähig, enorm abriebfest (d. h. staubfrei) und sehr hart. Wegen des hohen Preises beschränkt sich aber ihr Einsatz im wesentlichen auf Schutzanzüge und hochwertige Filter für Schadstoffe in Luftströmen.

Kugelkohle ist wegen ihrer speziellen Form, aber auch wegen der extrem hohen Abriebfestigkeit, beispielsweise für besondere Einsatzgebiete, wie z. B. Flächenfilter für Schutzanzüge gegen chemische Gifte und Filter für niedrige Schadstoffkonzentrationen in großen Luftmengen, sehr gefragt. So kann bei der Beladung von retikulierten, großporigen Polyurethanschäumen mit Aktivkohle gemäß der DE 38 13 563 A1 nur eine gut rieselfähige Kohle eingesetzt werden, wenn auch die inneren Schichten des Schaumstoffinaterials optimal belegt werden sollen. Bei der Herstellung von Schutzanzügen gegen chemische Gifte in Anlehnung an die DE 33 04 349 C3 beispielsweise kann ebenfalls nur eine hoch abriebfeste Kohle eingesetzt werden, und nur Kugelkohle erfüllt diese Anforderung.

Kugelkohle wird heute noch meist durch mehrstufige und sehr aufwendige Verfahren hergestellt. Das bekannteste Verfahren besteht in der Herstellung von Kügelchen aus Steinkohlenteerpech und geeigneten asphaltartigen Rückständen der Erdölchemie, welche oxidiert - damit sie unschmelzbar werden -, geschwelt und aktiviert werden. Beispielsweise kann die Kugelkohle auch in einem mehrstufigen Verfahren ausgehend von Bitumen hergestellt werden. Diese mehrstufigen Verfahren sind sehr kostenintensiv, und der damit verbundene hohe Preis dieser Kugelkohle verhindert viele Anwendungen, bei denen die Kugelkohle aufgrund ihrer Eigenschaften eigentlich bevorzugt werden müßte.

Folglich wurde versucht, hochwertige Kugelkohle auf anderem Wege herzustellen. Aus dem Stand der Technik bekannt ist die Herstellung von Kugelkohle durch Schwelung und anschließende Aktivierung von neuen oder gebrauchten Ionenaustauschern, die Sulfonsäuregruppen enthalten, bzw. durch Schwelung von Ionenaustauschervorstufen in Gegenwart von Schwefelsäure und anschließende Aktivierung, wobei die Sulfonsäuregruppen bzw. die Schwefelsäure die Funktion eines Vernetzers haben, wobei die Ausbeuten - unabhängig davon, ob von fertigen Kationenaustauschern oder von unsulfonierten Ionenaustauschervorstufen ausgegangen wird - etwa 30 bis 50 % betragen, bezogen auf organisches bzw. polymeres Ausgangsmaterial. Solche Verfahren sind beispielsweise in der DE 43 28 219 A1 und in der DE 43 04 026 A1 sowie in der DE 196 00 237 A1, einschließlich der deutschen Zusatzanmeldung DE 196 25 069 A1, beschrieben. Nachteilig und problematisch bei diesen Verfahren sind aber insbesondere die großen Mengen an freigesetztem Schwefeldioxid - pro kg Endprodukt etwa 1 kg SO₂ - sowie die damit unter anderem verbundenen Korrosionsprobleme in den Herstellapparaturen. Bei der Verwendung gebrauchter Ionenaustauscherharze, insbesondere gebrauchter Kationenaustauscherharze, als Ausgangsmaterialien besteht zudem das Problem, daß diese - trotz einer Wäsche mit Säure - mit Kationen, die sich dann im Endprodukt anreichern, verunreinigt sind, so daß die Herstellung größerer Mengen Kugelkohle in gleichbleibender Qualität folglich sehr schwierig ist. Bei der Verwendung von Ionenaustauschervorstufen - also Polymerkügelchen ohne Austauschergruppen (Sulfonsäuregruppen) - sind zudem große Mengen von Schwefelsäure und/oder Oleum für die Vernetzung während der Schwelung erforderlich.

In der WO 98/07655 A1 wird ein Verfahren zur Herstellung von Aktivkohlekügelchen beschrieben, bei dem zunächst eine Mischung, die einen aus der Diisocyanatherstellung stammenden Destillationsrückstand, einen kohlenstoffhaltigen Verarbeitungshilfsstoff und gegebenenfalls einen oder mehrere weitere Zusatzstoffe umfaßt, zu rieselfähigen Kügelchen verarbeitet wird und anschließend die auf diese Weise erhaltenen Kügelchen geschwelt und dann aktiviert werden. Auch bei diesem Verfahren werden bei der Schwelung stoßweise große Mengen an Zersetzungsprodukten freigesetzt, was mit den zuvor geschilderten Problemen verbunden ist.

US 2009/142252 und US 4 115 317 offenbaren Vorrichtungen sowie Verfahren Herstellung von Aktivkohle, die eine Carbonisierungseinrichtung zur Carbonisierung von Ausgangsmaterialien, eine Aktivierungseinrichtung, sowie eine Abgasbehandlungseinrichtung umfassen.

US 2007/254807 und WO 2007/119698 offenbaren Vorrichtungen sowie Verfahren zur Herstellung von Aktivkohle, die eine Carbonisierungseinrichtung zur Carbonisierung von Ausgangsmaterialien, eine Aktivierungseinrichtung, sowie eine Abgasbehandlungseinrichtung umfassen. Carbonisierung und Aktivierung werden in einer einzigen Einrichtung durchgeführt.

Die auf Anmelderin selbst zurückgehende WO 01/83368 A1 betrifft ein verbessertes Verfahren zur Herstellung von Aktivkohle, wobei die erforderlichen Verfahrensschritte der Schwelung einerseits und der Aktivierung andererseits getrennt voneinander durchgeführt werden, wobei die Schwelung kontinuierlich, aber die Nachschwelung und Aktivierung diskontinuierlich durchgeführt wird. Dieses Verfahren basiert maßgeblich auf der Trennung der korrosiven Phase (d. h. Vorschwelung, verbunden mit SO₂-Ausstoß) von der Hochtemperatur-Phase (Aktivierung). Denn vorgeschweltes Ausgangsmaterial ist nicht mehr korrosiv, d. h. bei weiterer Temperaturerhöhung entstehen keine korrosiven Stoffe bzw. Gase mehr.

Weiterhin sind aus den auf die Anmelderin selbst zurückgehenden Druckschriften DE 10 2004 036 109 A1, DE 10 2005 036 607 A1 sowie WO 2005/016819 A1 Vorrichtungen zur Herstellung von Aktivkohle offenbart.

Die aus dem Stand der Technik bekannten Verfahren und Vorrichtungen zur Herstellung von Aktivkohle befassen sich jedoch meist mit der Verbesserung nur von Teilaspekten und liefern keinen ganzheitlichen Ansatz, welcher allen bei der Aktivkohleherstellung auftretenden Problemen Rechnung trägt, insbesondere dem hohen Energieaufwand, dem Einsatz kostenintensiver Aus-gangsmaterialien und Chemikalien, dem Ausstoß von Abgasen, dem Verlust von Energie in den einzelnen Verfahrensstufen und dergleichen.

Das der vorliegenden Erfindung zugrundeliegende Problem besteht daher in der Bereitstellung einer neuen Vorrichtung (Anlage) bzw. eines neuen Verfahrens zur Herstellung von Aktivkohle, wobei die zuvor geschilderten, mit dem Stand der Technik verbundenen Nachteile - zumindest teilweise - vermieden oder aber wenigstens abgeschwächt werden sollen.

Dabei sollen die Vorrichtung bzw. Anlage sowie das Verfahren eine weniger aufwendige, möglichst wenig kostenintensive sowie in ökonomischer wie ökologischer Hinsicht verbesserte bzw. effizientere Herstellung von Aktivkohle ermöglichen.

Zur Lösung der zuvor geschilderten Aufgabe schlägt die vorliegende Erfindung daher eine Vorrichtung (Anlage) zur Herstellung von Aktivkohle gemäß Anspruch 1 bzw. ein Verfahren zur Herstellung von Aktivkohle gemäß Anspruch 9 bzw. die Verwendung der erfindungsgemäßen Vorrichtung (Anlage) gemäß Anspruch 15 vor; weitere, vorteilhafte Ausgestaltungen sind jeweils Gegenstand der betreffenden Unteransprüche.

Gegenstand der vorliegenden Erfindung ist somit - gemäß einem **ersten** Aspekt der vorliegenden Erfindung - eine Vorrichtung bzw. Anlage zur Herstellung von Aktivkohle, insbesondere durch Carbonisierung und nachfolgende Aktivierung polymerer organischer, vorzugsweise sulfonierter Ausgangsmaterialien, wobei die Vorrichtung bzw. Anlage
- gegebenenfalls eine Trocknungseinrichtung zur Trocknung der Ausgangsmaterialien,
- gegebenenfalls eine Sulfonierungseinrichtung zur Sulfonierung und/oder Peptisation der gegebenenfalls zuvor getrockneten Ausgangsmaterialien, insbesondere stromabwärts zur gegebenenfalls vorhandenen Trocknungseinrichtung angeordnet,
- eine Carbonisierungseinrichtung zur Carbonisierung der gegebenenfalls zuvor getrockneten und/oder sulfonierten und/oder peptisierten Ausgangsmaterialien, insbesondere stromabwärts zur gegebenenfalls vorhandenen Trocknungseinrichtung und/oder zur gegebenenfalls vorhandenen Sulfonierungseinrichtung angeordnet,
- eine stromabwärts zur Carbonisierungseinrichtung angeordnete Aktivierungseinrichtung zur Aktivierung der zuvor in der Carbonisierungseinrichtung carbonisierten Ausgangsmaterialien
aufweist, wobei die Vorrichtung bzw. Anlage außerdem mindestens eine Abgasbehandlungseinrichtung zur Behandlung der in der Carbonisierungseinrichtung und/oder in der Aktivierungseinrichtung im Betrieb gebildeten Abgase umfaßt.

Im allgemeinen umfaßt die Abgasbehandlungseinrichtung mindestens eine thermische Nachverbrennung (TNV).

Unter einer thermischen Nachverbrennung (TNV) wird im Rahmen der vorliegenden Erfindung eine Verbrennung der bei der Carbonisierung bzw. Aktivierung entstehenden Abgase bei Temperaturen oberhalb von 900 °C verstanden. Durch dieses Verfahren werden in den Abgasen enthaltene Gase, wie insbesondere Kohlenwasserstoffe, Kohlenmonoxid und elementarer Wasserstoff, im allgemeinen und im wesentlichen vollständig zu Wasser und Kohlendioxid umgesetzt. Die verbleibenden Abgase können somit weniger aufwendig und folglich kostengünstiger gereinigt werden und die entstehende Wärme kann dem Carbonisierungs- bzw. Aktivierungsprozeß wieder zugeführt werden, wodurch Energie eingespart werden kann.

Gemäß einer bevorzugten Ausführungsform der vorliegenden Erfindung umfaßt die erfindungsgemäße Vorrichtung mindestens eine Abgasbehandlungseinrichtung zur Behandlung der in der Carbonisierungseinrichtung im Betrieb gebildeten Abgase einerseits und mindestens eine Abgasbehandlungseinrichtung zur Behandlung der in der Aktivierungseinrichtung im Betrieb gebildeten Abgase andererseits.

Was die Carbonisierungseinrichtung der erfindungsgemäßen Vorrichtung anbelangt, so kann diese üblicherweise wie folgt ausgebildet sein.

Im allgemeinen umfaßt die Carbonisierungseinrichtung mindestens ein Drehrohr, insbesondere mindestens einen Drehrohrofen.

Es hat sich als vorteilhaft erwiesen, wenn die Carbonisierungseinrichtung ein geschlossenes System bildet und/oder die Carbonisierungseinrichtung unter inerten Bedingungen betreibbar ist.

Unter einem geschlossenen System soll im Rahmen der Erfindung insbesondere ein System verstanden werden, welches möglichst wenig Energie mit der Umgebung austauscht. Auch ein Materieaustausch mit der Umgebung soll bis auf die zugeführten Prozeßgase (z. B. Wasserdampf, Kohlendioxid etc.) und die abgeführten Abgase möglichst vermieden oder aber zumindest minimiert werden; ein Materieaustausch findet also nur unter genau definierten und kontrollierten Bedingungen statt.

Unter dem Begriff inerte Bedingungen soll im Rahmen der vorliegenden Erfindung insbesondere verstanden werden, daß die erfindungsgemäße Vorrichtung mit einer Inertgasatmosphäre betrieben und das erfindungsgemäße Verfahren unter einer Inertgasatmosphäre durchgeführt wird, wobei es sich bei der Inertgasatmosphäre vorzugsweise um eine Edelgas- und/oder Stickstoffatmosphäre, bevorzugt eine Stickstoffatmosphäre, handelt. Durch die Inertgasatmosphäre wird eine ungewollte übermäßige Oxidation bzw. ein Abbrand des eingesetzten Materials vermieden.

Erfindungsgemäß kann die Carbonisierungseinrichtung kontinuierlich oder quasi-kontinuierlich betreibbar sein. Weiterhin kann die Temperatur der Carbonisierungseinrichtung im Betrieb kontinuierlich oder stufenweise regelbar sein.

Gemäß einer bevorzugten Ausführungsform der vorliegenden Erfindung ist die Temperatur der Carbonisierungseinrichtung im Betrieb derart regelbar, daß mehrere, insbesondere mindestens zwei, vorzugsweise vier bis acht, Temperaturzonen mit jeweils voneinander verschiedenen Temperaturen, vorzugsweise mit stromaufwärts jeweils ansteigender Temperatur der einzelnen Temperaturstufen, vorliegen. Alternativ kann aber auch ein Temperaturgradient, vorzugsweise mit stromaufwärts ansteigendem Temperaturprofil, vorliegen.

Unter dem Begriff der Temperaturzone soll im Rahmen der vorliegenden Erfindung eine Heizzone bzw. ein Bereich mit zumindest im wesentlichen konstanter Temperatur verstanden werden. Der Anstieg der Temperatur in Verfahrensablaufrichtung über mehrere Temperaturzonen bedingt einen relativ konstanten Ausstoß von Schwefeloxiden SOₓ aus dem zu carbonisierenden Ausgangsmaterial. Insbesondere werden keine Spitzen des Schwefeloxidausstoßes, insbesondere des Schwefeldioxidausstoßes, erhalten, so daß die Einrichtungen zur Auffangung und Behandlung der Abgase kleiner dimensioniert sein können, als dies bei Auftreten von Spitzen im Ausstoß der Schwefeloxide möglich wäre. Darüber hinaus ermöglicht erst die kontinuierliche und konstante Freisetzung von Schwefeloxiden, insbesondere Schwefeldioxid, einen nachfolgend noch im Detail geschilderten Recycling- bzw. Kreisprozeß der Schwefeloxide, welcher sonst nicht durchführbar wäre.

Was die Temperatur der Carbonisierungseinrichtung im Betrieb anbelangt, so kann dieser im Rahmen der vorliegenden Erfindung in weiten Bereichen variieren. Im allgemeinen ist die Temperatur der Carbonisierungseinrichtung im Bereich von 20 °C bis 1.200 °C, insbesondere 30 °C bis 1.100 °C, vorzugsweise 50 °C bis 1.000 °C, regelbar. Dabei hat es sich als besonders vorteilhaft herausgestellt, wenn eine erste, vorzugsweise am Einlaß oder in Verfahrensablaufrichtung am Beginn der Carbonisierungseinrichtung befindliche Temperaturzone im Betrieb in Bereich von 50 °C bis 500 °C, insbesondere 200 °C bis 450 °C, einstellbar ist. Darüber hinaus kann es vorgesehen sein, daß eine weitere, vorzugsweise am Auslaß oder Ende der Carbonisierungseinrichtung befindliche Temperaturzone im Betrieb im Bereich von 800 °C bis 1.200 °C, insbesondere 850 °C bis 950 °C, einstellbar ist. Anwendungsbezogen oder einzelfallbedingt ist es jedoch nicht ausgeschlossen, von den vorgenannten Werten abzuweichen, ohne daß der Rahmen der vorliegenden Erfindung verlassen ist. Dies zu entscheiden, liegt im fachmännischen Können bzw. im Ermessen des auf diesem Gebiet tätigen Fachmanns.

Gemäß einer besonders bevorzugten Ausführungsform der vorliegenden Erfindung ist die Carbonisierungseinrichtung in mindestens zwei Abschnitte unterteilt: Dabei kann insbesondere ein erster, vorzugsweise stromaufwärts angeordneter Abschnitt durch eine beheizbare Vibrationsrinne gebildet sein und ein zweiter, vorzugsweise stromabwärts zum ersten Abschnitt angeordneter Abschnitt durch ein Drehrohr, vorzugsweise einen Drehrohrofen, insbesondere mit im Betriebszustand in Verfahrensablaufrichtung ansteigendem Temperaturprofil oder Temperaturgradienten, gebildet sein.

Unter dem Begriff der Vibrationsrinne soll im Rahmen der vorliegenden Erfindung eine Rinne oder eine andere Beförderungseinrichtung, wie z. B. ein Förderband, verstanden werden, welche durch systematische Erschütterung bzw. Vibration eine gute Durchmischung und gleichmäßige Erwärmung des zu carbonisierenden Materials gewährleistet.

Gemäß einer besonderen Ausführungsform der vorliegenden Erfindung kann der erste Abschnitt der Carbonisierungseinrichtung mit konstanter Temperatur einstellbar ausgebildet oder mit in Verfahrensablaufrichtung ansteigendem Temperaturprofil oder Temperaturgradienten regelbar ausgebildet sein, während der zweite Abschnitt mit in Verfahrensablaufrichtung ansteigendem Temperaturprofil oder Temperaturgradienten regelbar ausgebildet sein kann. Es hat sich im Rahmen der vorliegenden Erfindung als vorteilhaft erwiesen, wenn die Temperatur in dem in Verfahrensablaufsrichtung ersten Abschnitt der Carbonisierungseinrichtung kontinuierlich oder stufenweise regelbar ist.

Was die Temperatur in dem in Verfahrensablaufsrichtung ersten Abschnitt der Carbonisierungseinrichtung anbelangt, so kann diese in beiden Bereichen variieren. Im allgemeinen ist die Temperatur in dem in Verfahrensablaufrichtung ersten Abschnitt der Carbonisierungseinrichtung im Bereich von 50 °C bis 500 °C, vorzugsweise 200 °C bis 450 °C, regelbar. Dennoch ist es anwendungsbezogen oder einzelfallbedingt nicht ausgeschlossen, von den vorgenannten Werten abzuweichen, ohne daß der Rahmen der vorliegenden Erfindung verlassen ist. Dies zu entscheiden, liegt im fachmännischen Können bzw. im Ermessen des auf diesem Gebiet tätigen Fachmanns.

Gemäß einer erfindungsgemäß bevorzugten Ausführungsform ist die Temperatur in dem in Verfahrensablaufrichtung zweiten Abschnitt der Carbonisierungseinrichtung in Verfahrensablaufsrichtung ansteigend, insbesondere stufenweise oder stufenlos ansteigend, regelbar. Insbesondere ist die Temperatur in dem in Verfahrensablaufsrichtung zweiten Abschnitt der Carbonisierungseinrichtung in Verfahrensablaufsrichtung in mehreren Temperaturzonen oder mit einem Temperaturgradienten ansteigend regelbar. Was die Temperatur in dem in Verfahrensablaufsrichtung zweiten Abschnitt der Carbonisierungseinrichtung anbelangt, so kann diese in weiten Bereichen variieren. Im allgemeinen ist die Temperatur in dem in Verfahrensablaufrichtung zweiten Abschnitt der Carbonisierungseinrichtung in Verfahrensablaufsrichtung ansteigend in Bereich von 300 °C bis 1.200 °C, vorzugsweise 350 °C bis 950 °C, regelbar. Dennoch ist es anwendungsbezogen oder einzelfallbedingt nicht ausgeschlossen, von den vorgenannten Werten abzuweichen, ohne daß der Rahmen der vorliegenden Erfindung verlassen ist. Dies zu entscheiden, liegt im fachmännischen Können bzw. im Ermessen des auf diesem Gebiet tätigen Fachmanns.

Gemäß einer wiederum besonders bevorzugten Ausführungsform der vorliegenden Erfindung weist die Carbonisierungseinrichtung, vorzugsweise am Einlaß oder in Verfahrensablaufsrichtung am Beginn der Carbonisierungseinrichtung, insbesondere am Einlaß oder in Verfahrensablaufrichtung am Beginn des zweiten Abschnitts der Carbonisierungseinrichtung, eine Einsprüh- oder Eindüseinrichtung zum Einsprühen oder Eindüsen von Wasserdampf, insbesondere in Form eines Wasserdampf/Inertgas-Gemisches, auf. Was den Anteil des Wasserdampfes in dem Wasserdampf/Inertgas-Gemisch anbelangt, so kann dieser in weiten Bereichen variieren. Im allgemeinen ist der Anteil des Wasserdampfes in dem Wasserdampf/Inertgas-Gemisch im Bereich von 1 bis 30 Vol.-%, insbesondere 2 bis 20 Vol.-%, vorzugsweise 5 bis 15 Vol.-%, einstellbar. Dennoch ist es anwendungsbezogen oder einzelfallbedingt nicht ausgeschlossen, von den vorgenannten Werten abzuweichen, ohne daß der Rahmen der vorliegenden Erfindung verlassen ist. Dies zu entscheiden, liegt im fachmännischen Können bzw. im Ermessen des auf diesem Gebiet tätigen Fachmanns. Im Rahmen der vorliegenden Erfindung ist es bevorzugt, wenn sich die Einsprüh- oder Eindüseeinrichtung zum Einsprühen oder Eindüsen von Wasserdampf, insbesondere in Form eines Wasserdampf/Inertgas-Gemisches im ersten Drittel, vorzugsweise im ersten Viertel, der Carbonisierungseinrichtung befindet.

Weiterhin hat es sich im Rahmen der vorliegenden Erfindung als vorteilhaft herausgestellt, wenn die Carbonisierungseinrichtung, vorzugsweise am Auslaß oder in Verfahrensablaufrichtung am Ende der Carbonisierungseinrichtung, eine Eindüseeinrichtung zum Eintragen von Sauerstoff, insbesondere in Form eines Sauerstoffgemisches mit mindestens einem weiteren Gas, vorzugsweise in Form von Luft, aufweist. Was den Volumenstrom des eingetragenen Sauerstoffs in die Carbonisierungseinrichtung anbelangt, so kann dieser in beiden Bereichen variieren. Im allgemeinen ist der eingedüste Volumenstrom des Sauerstoffs, insbesondere in Form eines Sauerstoffgemisches mit mindestens einem weiteren Gas, vorzugsweise in Form von Luft, im Bereich von 10 bis 500 1/min, insbesondere 25 bis 250 1/min, vorzugsweise 50 bis 1001/min, einstellbar. Dennoch ist es anwendungsbezogen oder einzelfallbedingt nicht ausgeschlossen, von den vorgenannten Werten abzuweichen, ohne daß der Rahmen der vorliegenden Erfindung verlassen ist. Dies zu entscheiden, liegt im fachmännischen Können bzw. im Ermessen des auf diesem Gebiet tätigen Fachmanns. Dabei hat es sich als besonders vorteilhaft herausgestellt, wenn sich die Eindüseinrichtung zum Eintragen des Sauerstoffs im letzten Drittel, vorzugsweise im letzten Viertel der Reaktionsstrecke in der Carbonisierungseinrichtung befindet.

Durch das Eindüsen bzw. Einsprühen von Wasserdampf und/oder Sauerstoff wird durch Oxidation bzw. Verbrennung der Pyrolysegase zum einen ein Kondensieren von Pyrolysegasen im Basisporensystem der entstehenden Aktivkohle weitgehend verhindert, zum anderen kann die freiwerdende Wärme zur Beheizung der Carbonisierungseinrichtung verwendet und der entsprechende Betrag an Heizenergie eingespart werden. Bei der Zugabe von Sauerstoff bzw. eines Sauerstoffgemisches ist jedoch darauf zu achten, daß dieser bzw. dieses nur mit den Pyrolysegasen und nicht mit dem Carbonisat in Berührung kommt, um einen Abbrand desselben zu verhindern.

Im allgemeinen ist an die Carbonisierungseinrichtung eine Abgasbehandlungseinrichtung zur Behandlung der in der Carbonisierungseinrichtung im Betrieb gebildeten Abgase angeschlossen bzw. ist ihr nachgeschaltet.

Hierbei kann es insbesondere vorgesehen sein, daß die Abgasbehandlungseinrichtung mindestens eine thermische Nachverbrennung umfaßt.

Gemäß einer besonders bevorzugten Ausführungsform der vorliegenden Erfindung weist die Abgasbehandlungseinrichtung, insbesondere stromaufwärts zur thermischen Nachverbrennung, mindestens einen Wärmetauscher zum Abkühlen der aus der thermischen Nachverbrennung resultierenden Abgase auf.

Die freiwerdende Wärme kann entweder zur Heizung der Carbonisierungseinrichtung und/oder zur Erwärmung der im folgenden beschriebenen Oxidationseinrichtung für Schwefeloxide verwendet werden.

Gegebenenfalls ist der thermischen Nachverbrennung und dem Wärmetauscher eine Trocknungseinrichtung zur Trocknung der abgekühlten Abgase nachgeschaltet. Der Trocknungseinrichtung wiederum ist gegebenenfalls eine Aufheizeinrichtung zur Erwärmung der getrockneten Abgase nachgeschaltet. Die Trocknung der abgekühlten Abgase kann entweder auf physikalischem Wege, z. B. durch Adsorption, oder auf chemischem Wege, z. B. durch Reaktion mit konzentrierter Schwefelsäure oder Phosphorpentoxid, erfolgen, wobei eine Trocknung der Abgase auf chemischen Wege im Rahmen der vorliegenden Erfindung bevorzugt ist.

Es hat sich im Rahmen der vorliegenden Erfindung als besonders vorteilhaft erwiesen, wenn die Abgasbehandlungseinrichtung eine Oxidationseinrichtung zur vorzugsweise katalytischen Oxidation der in den in der Carbonisierungseinrichtung im Betrieb gebildeten Abgase enthaltenen Schwefeloxide, insbesondere Schwefeldioxid, zu Schwefeltrioxid umfaßt, vorzugsweise stromabwärts zur thermischen Nachverbrennung und den gegebenenfalls vorgesehenen Wärmetauscher, Trocknungseinrichtung und/oder Aufheizeinrichtung. Dabei kann es vorgesehen sein, daß die Oxidationseinrichtung mindestens einen Oxidationskatalysator, bevorzugt auf Vanadium- und/oder Platinbasis, aufweist. Weiterhin kann es vorgesehen sein, daß die Oxidationseinrichtung eine Rückführeinrichtung für die Rückführung des Schwefeltrioxids in die Sulfonierungseinrichtung aufweist. Gegebenenfalls erfolgt die Rückführung des Schwefeltrioxids in die Sulfonierungseinrichtung über eine zwischengeschaltete Herstelleinrichtung für das Sulfonierungsmittel.

Das gebildete Schwefeltrioxid kann folglich entweder unmittelbar und/oder mittelbar in die Sulfonierungseinrichtung zurückgeführt werden. Unter einer unmittelbaren Rückführung ist hierbei eine direkte Rückführung von gasförmigen Schwefeltrioxid in die Sulfonierungseinrichtung zu verstehen. Die mittelbare Rückführung der Schwefeltrioxids in die Sulfonierungseinrichtung beinhaltet hingegen zunächst ein Auswaschen des Schwefeltrioxids aus dem Gasstrom, insbesondere mit Wasser oder konzentrierter Schwefelsäure in einer zwischengeschalteten Einrichtung, und somit eine Rückführung des Schwefeltrioxids in die Sulfonierungseinrichtung in Form von auf diese Weise generierter konzentrierter Schwefelsäure bzw. Oleum.

Gemäß einer besonderen Ausführungsform der vorliegenden Erfindung weist die eine Oxidationseinrichtung eine Abtrenneinrichtung zum Abtrennen des Schwefeltrioxids von den übrigen Bestandeilen der Abgase, insbesondere Kohlenstoffoxiden und/oder Wasserdampf und/oder Stickoxiden, auf.

Dabei kann es vorgesehen sein, daß nachgeschaltet zur Abtrenneinrichtung zum Abtrennen des Schwefeltrioxids von den übrigen Bestandteilen der Abgase gegebenenfalls ein Wäscher zur Wäsche der abgetrennten übrigen Bestandeile der Abgase vorgesehen ist.

Was die der Carbonisierung nachgeschaltete Aktivierungseinrichtung anbelangt, so kann diese im allgemeinen wie folgt ausgebildet sein:
Im allgemeinen ist die Aktivierungseinrichtung diskontinuierlich betreibbar.

Gemäß einer bevorzugten Ausführungsform der vorliegenden Erfindung bildet die Aktivierungseinrichtung ein geschlossenes System, insbesondere ist die Aktivierungseinrichtung, insbesondere zu Beginn der Aktivierung und/oder zu Beginn der Aufheizphase, unter inerten Bedingungen betreibbar. Zu den Begriffen des geschlossenen Systems und der inerten Bedingungen kann auf die obigen Ausführungen verwiesen werden.

Was die Temperatur der Aktivierungseinrichtung im Betrieb anbelangt, so kann diese in weiten Bereichen variieren. Im allgemeinen ist die Temperatur der Aktivierungseinrichtung im Betrieb im Bereich von 300 °C bis 1.800 °C, insbesondere 400 °C bis 1.500 °C, vorzugsweise 500 °C. bis 1.250 °C, regelbar. Dennoch ist es anwendungsbezogen oder einzelfallbedingt nicht ausgeschlossen, von den vorgenannten Werten abzuweichen, ohne daß der Rahmen der vorliegenden Erfindung verlassen ist; dies zu entscheiden, liegt im fachmännischen Können bzw. im Ermessen des auf diesem Gebiet tätigen Fachmanns.

Insbesondere ist die Temperatur der Aktivierungseinrichtung im Betrieb stufenlos und/oder kontinuierlich regelbar. Dabei kann es vorgesehen sein, daß die Aktivierungseinrichtung mindestens eine Heizeinrichtung, insbesondere eine elektrisch betriebene Heizung, aufweist.

Im allgemeinen weist die Aktivierungseinrichtung mindestens eine Einführeinrichtung zum Eintragen, insbesondere Eindüsen und/oder Einblasen, mindestens eines Aktivierungsgases, insbesondere Wasserdampf und/oder Kohlendioxid und/oder Sauerstoff und/oder Ammoniak, auf. Im Rahmen der vorliegenden Erfindung kann es dabei vorgesehen sein, daß die Einführeinrichtung mindestens eine Temperatursteuerungseinrichtung zur Einstellung des in die Aktivierungseinrichtung einzutragenden Aktivierungsgases (z. B. Wasserdampf) aufweist.

Gemäß einer bevorzugten Ausführungsform der vorliegenden Erfindung weist die Einführeinrichtung mindestens eine Einführeinrichtung zum Eintragen, insbesondere Eindüsen, Einsprühen und/oder Einblasen, von Wasserdampf, insbesondere in Form eines Wasserdampf/Inertgas-Gemisches, auf. Was den Anteil des Wasserdampfes in dem Wasserdampf/Inertgas-Gemisch anbelangt, so kann dieser in weiten Bereichen variieren. Im allgemeinen ist der Anteil des Wasserdampfes in dem Wasserdampf/Inertgas-Gemisch im Bereich von 5 bis 70 Vol.-%, insbesondere 10 bis 50 Vol.-%, vorzugsweise 15 bis 40 Vol.-%, einstellbar. Bei Inertgasen im handelt es sich im Rahmen der vorliegenden Erfindung um Gase oder gasförmige Gemische, welche unter den bei der Aktivierung herrschenden Bedingungen nicht bzw. nur wenig reaktiv sind und/oder deren Reaktionen keinen oder aber zumindest keinen negativen Einfluß auf die bei der Aktivkohleherstellung ablaufenden Prozesse besitzen; bei den im Rahmen der vorliegenden Erfindung verwendeten Inertgase handelt es sich insbesondere um Stickstoff und/oder Edelgase (z. B. Argon), vorzugsweise Stickstoff. Dennoch ist es anwendungsbezogen oder einzelfallbedingt nicht ausgeschlossen, von den vorgenannten Werten abzuweichen, ohne daß der Rahmen der vorliegenden Erfindung verlassen ist; dies zu entscheiden liegt im fachmännischen Können bzw. im Ermessen des auf diesem Gebiet tätigen Fachmanns. Dabei kann es vorgesehen sein, daß der Wasserdampf bei Temperaturen ab 500 °C eindüsbar, einsprühbar und/oder einblasbar ist.

Gemäß einer besonders bevorzugten Ausführungsform der vorliegenden Erfindung weist die Einfiihreinrichtung mindestens eine Einführeinrichtung zum Eintragen, insbesondere Eindüsen, Einsprühen und/oder Einblasen, von Kohlendioxid, insbesondere in Form eines Kohlendioxid/Inertgas-Gemisches, auf. Bezüglich der eingesetzten Inertgase kann auf die obigen Ausführungen verwiesen werden. In diesem Fall kann es vorgesehen sein, daß das Kohlendioxid bei Temperaturen ab 800 °C eindüsbar, einsprühbar und/oder einblasbar ist.

Das Abbrandverhalten der Rohaktivkohle und somit ihre spätere Porosität wird maßgeblich durch die Temperatur während die Aktivierung und gegebenenfalls den CO₂-Gehalt in der Aktivierungseinrichtung während der Aktivierung beeinflußt.

Gemäß einer wiederum besonders bevorzugten Ausführungsform der vorliegenden Erfindung wird die Einführeinrichtung zum Eintragen der Aktivierungsgase von mindestens einem Bevorratungsbehältnis, welches das mindestens eine Aktivierungsgas enthält, gespeist und/oder ist hieran angeschlossen.

Im allgemeinen ist an die Aktivierungseinrichtung eine Abgasbehandlungseinrichtung zur Behandlung der in der Aktivierungseinrichtung im Betrieb gebildeten Abgase angeschlossen und/oder ist ihr nachgeschaltet. Dabei hat es sich als besonders vorteilhaft erwiesen, wenn die Abgasbehandlungseinrichtung mindestens eine thermische Nachverbrennung umfaßt. Bei den Abgasen aus der Aktivierungseinrichtung handelt es sich je nach eingesetzten Aktivierungsgasen im allgemeinen und zumindest im wesentlichen um Wasserstoff und Kohlenstoffoxide, insbesondere Kohlenstoffmonoxid.

Erfindungsgemäß kann es vorgesehen sein, daß die Abgasbehandlungseinrichtung, insbesondere stromaufwärts zur thermischen Nachverbrennung, mindestens einen Wäscher zur Wäsche der aus der thermischen Nachverbrennung stammenden Abgase aufweist.

Nach Passieren des gegebenenfalls vorhandenen Wäschers werden die Abgase, welche aufgrund der thermischen Nachverbrennung überwiegend aus Kohlendioxid und Wasserdampf bestehen, emittiert. Allerdings werden allenfalls überschüssige Abgase dem Wäscher zugeführt, d. h. Abgase, welche im Prozeß nicht weiter genutzt werden können. Der überwiegende Teil der Abgase aus der Aktivierung wird - wie nachfolgend noch beschrieben - in den einzelnen Prozeßstufen der Aktivkohleherstellung als Energielieferant genutzt.

Gemäß einer ganz besonders bevorzugten Ausführungsform der vorliegenden Erfindung werden die aus der der Aktivierungseinrichtung nachgeschalteten Abgasbehandlungseinrichtung, insbesondere aus der thermischen Nachverbrennung, stammenden Abgase zur insbesondere indirekten Beheizung der Aktivierungseinrichtung und/oder über eine Zuführleitung zur Aufheizung des das mindestens eine Aktivierungsgas enthaltenden Bevorratungsbehältnisses oder des mindestens einen Aktivierungsgases und/oder für die Beheizung der Trocknungseinrichtung, insbesondere zur Erzeugung einer Wirbelschicht, verwendet.

Zu diesem Zweck kann die Vorrichtung bzw. die Anlage insbesondere derart konzipiert sein, daß die aus der thermischen Nachverbrennung (TNV) der Abgase aus der Aktivierungseinrichtung kommenden, ca. 1.000 °C heißen Abgase außen an der Aktivierungseinrichtung entlanggeführt werden und diese indirekt beheizen, so daß mindestens ca. 10 % bis 20 % des Energiebedarfs während der Aktivierung auf diese Art gedeckt werden können. Die dann immer noch ca. 800 °C heißen Abgase können anschließend zur Erwärmung der Aktivierungsgase, insbesondere des Wasserdampfes, verwendet werden. Alternativ können die Abgase der thermischen Nachverbrennung auch direkt, d. h. ohne vorheriges Entlangführen an der Aktivierungseinrichtung zur Beheizung der Aktivierungsgase verwendet werden. Erfindungsgemäß besonders bevorzugt ist es, wenn die Abgase, gegebenenfalls nach Passieren des Bevorratungsbehältnisses für die Aktivierungsgase und/oder der Erwärmung der Aktivierungsgase, zur Trocknung der zur Aktivkohleherstellung benötigen Ausgangsmaterialien, insbesondere zur Erzeugung einer Wirbelschicht, verwendet werden, insbesondere nachdem sie durch Verdünnen mit Luft auf ca. 150 °C heruntergekühlt wurden. Das abgekühlte Abgas kann dann über einen Wäscher emittiert werden, wobei - wie oben bereits angeführt - überschüssiges, nicht genutztes Abgas jederzeit über einen Wäscher entfernt und nachfolgend emittiert werden kann.

Was die der gegebenenfalls vorhandenen Sulfonierungseinrichtung vorgeschaltete Trocknung anbelangt, so kann diese insbesondere wie folgt ausgestaltet sein:
Im allgemeinen ist die Trocknungseinrichtung in einer Wirbelschicht betreibbar. Insbesondere ist die Trocknungseinrichtung, insbesondere deren Wirbelschicht, mittels aus der Abgasbehandlungseinrichtung, insbesondere aus der thermischen Nachverbrennung, stammender Abgase betreibbar und/oder beheizbar, insbesondere mittels aus der Abgasbehandlungseinrichtung für die aus der Aktivierungseinrichtung stammenden Abgase.

Im Rahmen der vorliegenden Erfindung kann es vorgesehen sein, daß die Trocknungseinrichtung diskontinuierlich betreibbar ist.

Was die Temperaturen anbelangt, bei denen die Trocknungseinrichtung betreibbar ist, so können diese in weiten Bereichen variieren. Im allgemeinen ist die Trocknungseinrichtung bei Temperaturen im Bereich von 100 °C bis 400 °C, insbesondere 100 °C bis 200 °C, betreibbar. Dennoch ist es anwendungsbezogen oder einzelfallbedingt nicht ausgeschlossen, von den vorgenannten Werten abzuweichen, ohne daß der Rahmen der vorliegenden Erfindung verlassen ist; dies zu entscheiden, liegt im fachmännischen Können bzw. im Ermessen des auf diesem Gebiet tätigen Fachmanns.

Was die der gegebenenfalls vorhandenen Trocknungseinrichtung gegebenenfalls nachgeschaltete Sulfonierungseinrichtung anbelangt, so kann diese insbesondere wie folgt ausgebildet sein:
Insbesondere kann es im Rahmen der vorliegenden Erfindung vorgesehen sein, daß die gegebenenfalls vorhandene Sulfonierungseinrichtung diskontinuierlich betreibbar ist.

Was die Temperaturen anbelangt, bei denen die Sulfonierungseinrichtung betreibbar ist, so können diese in weiten Bereichen variieren. Im allgemeinen ist die Sulfonierungseinrichtung bei Temperaturen im Bereich von 25 °C bis 400 °C, insbesondere 50 °C bis 300 °C, betreibbar. Dennoch ist es anwendungsbezogen oder einzelfallbedingt nicht ausgeschlossen, von den vorgenannten Werten abzuweichen, ohne daß der Rahmen der vorliegenden Erfindung verlassen ist; dies zu entscheiden, liegt im fachmännischen Können bzw. im Ermessen des auf diesem Gebiet tätigen Fachmanns.

Im Rahmen der vorliegenden Erfindung hat es sich als vorteilhaft erwiesen, wenn zwischen Carbonisierungseinrichtung und Aktivierungseinrichtung außerdem eine Klassiereinrichtung zum Klassieren des aus der Carbonisierungseinrichtung stammenden Carbonisats vorgesehen ist. Dies erlaubt eine Einteilung der resultierenden Aktivkohle anhand der Teilchengröße und somit nach Anwendungseigenschaften. Durch nachträgliches, planvolles Mischen der einzelnen Klassen kann die resultierende Aktivkohle speziell an die benötigen Anforderungen angepaßt werden. Auf diese Weise kommt nur solches Carbonisat in die Aktivierung, welches im Hinblick auf seine Teilchengröße gewünscht ist.

Weiterer Gegenstand der vorliegenden Erfindung - gemäß einem **zweiten** Aspekt der vorliegenden Erfindung - ist ein Verfahren zur Herstellung von Aktivkohle, insbesondere durch Carbonisierung und nachfolgende Aktivierung polymerer organischer, vorzugsweise sulfonierter Ausgangsmaterialien, wobei das Verfahren die folgenden Verfahrensschritte umfaßt:
(a) Bereitstellung polymerer organischer Ausgangsmaterialien; dann
(b) gegebenenfalls Trocknung der Ausgangsmaterialien (d. h. im Falle ungetrockneter bzw. feuchter Ausgangsmaterialien); nachfolgend
(c) gegebenenfalls Sulfonierung und/oder Peptisation der gegebenenfalls zuvor getrockneten Ausgangsmaterialien (d. h. im Falle unsulfonierter Ausgangsmaterialien); anschließend
(d) Carbonisierung der gegebenenfalls zuvor getrockneten und/oder sulfonierten und/oder peptisierten Ausgangsmaterialien; dann
(e) Aktivierung der zuvor carbonisierten Ausgangsmaterialien;
wobei die aus der Carbonisierung (d) und/oder aus der Aktivierung (e) stammenden Abgase einer Abgasbehandlung unterworfen werden.

Im Rahmen der vorliegenden Erfindung hat es sich insbesondere als vorteilhaft erwiesen, wenn als polymeres organisches Ausgangsmaterial insbesondere Ionenaustauscherharze und deren Vorstufen, z. B. sulfonierte Ionenaustauscherharze sowie deren unsulfonierte Vorstufen und/oder divinylbenzolvernetzte Polystyrole, wie z. B. Styrol/Divinylbenzol-Copolymere, in sulfonierter oder unsulfonierter Form, bevorzugt mit einem Divinylbenzolgehalt von z. B. 1 bis 10 Gew.-% Divinylbenzol, bezogen auf das Copolymer, verwendet werden.

Die Abgasbehandlung umfaßt im allgemeinen mindestens eine thermische Nachverbrennung.

Es hat sich im Rahmen der vorliegenden Erfindung als vorteilhaft erwiesen, wenn sowohl die aus der Carbonisierung als auch aus der Aktivierung stammenden Abgase jeweils einer Abgasbehandlung unterworfen werden.

Die aus der Carbonisierung bzw. Aktivierung stammenden Abgase werden bevorzugt jeweils einer eigenständigen Abgasbehandlung unterworfen, da sie unterschiedliche Zusammensetzungen aufweisen und folglich unterschiedliche Anforderungen an ihre Aufbereitung gestellt werden; so müssen z. B. die Abgase aus der Carbonisierung von Schwefeloxiden befreit werden.

Im allgemeinen wird die Carbonisierung in mindestens einem Drehrohr, insbesondere in mindestens einem Drehrohrofen, durchgeführt. Weiterhin hat es sich im Rahmen der vorliegenden Erfindung als vorteilhaft erwiesen, wenn die Carbonisierung in einem geschlossenen System durchgeführt wird und/oder die Carbonisierung unter inerten Bedingungen durchgeführt wird. Erfindungsgemäß kann die Carbonisierung kontinuierlich oder quasi-kontinuierlich betrieben werden und/oder kann die Temperatur während der Carbonisierung kontinuierlich oder stufenweise geregelt bzw. gesteuert werden. Gemäß einer bevorzugten Ausführungsform der vorliegenden Erfindung wird die Temperatur während der Carbonisierung derart geregelt und/oder gesteuert, daß die Carbonisierung in mehreren, insbesondere in mindestens zwei, vorzugsweise in vier bis acht Temperaturzonen mit jeweils voneinander verschiedenen Temperaturen, vorzugsweise mit stromaufwärts jeweils ansteigender Temperatur der einzelnen Temperaturstufen, durchgeführt wird. Alternativ kann es im Rahmen der vorliegenden Erfindung vorgesehen sein, daß die Carbonisierung in einem Temperaturgradienten, vorzugsweise mit stromaufwärts ansteigendem Temperaturprofil, durchgeführt wird.

Was die Temperatur während der Carbonisierung anbelangt, so kann diese in weiten Bereichen variieren. Im allgemeinen wird die Temperatur während er Carbonisierung im Bereich von 20 °C bis 1.200 °C, insbesondere 30 °C bis 1.100 °C, vorzugsweise 50 °C bis 1.000 °C, geregelt bzw. gesteuert. Dennoch ist es anwendungsbezogen oder einzelfallbedingt nicht ausgeschlossen, von den vorgenannten Werten abzuweichen, ohne daß der Rahmen der vorliegenden Erfindung verlassen ist; dies zu entscheiden, liegt im fachmännischen Können bzw. im Ermessen des auf diesem Gebiet tätigen Fachmanns. Im Rahmen der vorliegenden Erfindung kann es dabei vorgesehen sein, daß eine erste, vorzugsweise am Einlaß oder in Verfahrensablaufrichtung am Beginn der Carbonisierung(seinrichtung) befindliche Temperaturzone im Bereich von 50 °C bis 500 °C, insbesondere 200 °C bis 450 °C, eingestellt wird. Des weiteren kann es vorgesehen sein, daß eine weitere, vorzugsweise am Auslaß oder Ende der Carbonisierung(seinrichtung) befindliche Temperaturzone im Bereich von 800 °C bis 1.200 °C, insbesondere 850 °C bis 950 °C, eingestellt wird. Auch in diesen Fällen markieren die genannten Werte nur die üblichen, bislang bevorzugten Bereiche. Einzelfallbedingt oder anwendungsbezogen ist es jedoch ohne weiteres möglich, von den vorgenannten Werten abzuweichen, ohne daß der Rahmen der vorliegenden Erfindung verlassen ist. Dies zu entscheiden, liegt im fachmännischen Können bzw. im Ermessen des auf diesem Gebiet tätigen Fachmanns.

Die Carbonisierung ist im allgemeinen in mindestens zwei Teilschritte unterteilt. Hierbei kann es vorgesehen sein, daß ein erster, vorzugsweise stromaufwärts durchgeführter Teilschritt in einer beheizten Vibrationsrinne durchgeführt wird und ein zweiter, vorzugsweise stromabwärts zum ersten Abschnitt durchgeführter Teilschritt in einem Drehrohr, vorzugsweise in einem Drehrohrofen, insbesondere mit in Verfahrensablaufrichtung ansteigendem Temperaturprofil oder Temperaturgradienten, durchgeführt wird.

Erfindungsgemäß kann der erste Teilschritt mit konstanter Temperatur oder mit in Verfahrensablaufrichtung ansteigendem Temperaturprofil oder Temperaturgradienten durchgeführt werden und/oder kann der zweite Teilschritt mit in Verfahrensablaufrichtung ansteigendem Temperaturprofil oder Temperaturgradienten durchgeführt werden. Weiterhin kann im Rahmen der vorliegenden Erfindung die Temperatur in dem in Verfahrensablaufsrichtung ersten Teilschritt der Carbonisierung kontinuierlich oder stufenweise geregelt werden. Was die Temperaturen in dem in Verfahrensablaufrichtung ersten Teilschritt der Carbonisierung anbelangt, so können diese in weiten Bereichen variieren. Im allgemeinen wird die Temperatur in dem in Verfahrenablaufrichtung ersten Teilschritt der Carbonisierung kontinuierlich oder stufenweise im Bereich von 50 °C bis 500°C, vorzugsweise 200 °C bis 450 °C, geregelt. Dennoch ist es anwendungsbezogen oder einzelfallbedingt nicht ausgeschlossen, von den vorgenannten Werten abzuweichen, ohne daß der Rahmen der vorliegenden Erfindung verlassen ist. Dies zu entscheiden, liegt im fachmännischen Können bzw. im Ermessen des auf diesem Gebiet tätigen Fachmanns.

Weiterhin kann im Rahmen der vorliegenden Erfindung die Temperatur in dem in Verfahrensablaufsrichtung zweiten Teilschritt der Carbonisierung in Verfahrensablaufrichtung ansteigend, insbesondere stufenweise oder stufenlos ansteigend, insbesondere in mehreren Temperaturzonen oder mit einem Temperaturgradienten ansteigend, geregelt werden. Was die Temperatur in dem in Verfahrensablaufrichtung zweiten Teilschritt der Carbonisierung anbelangt, so kann diese in weiten Bereichen variieren. Im allgemeinen wird die Temperatur in Verfahrensablaufsrichtung zweiten Teilschritt der Carbonisierung in Verfahrensablaufsrichtung ansteigend im Bereich von 300 °C bis 1.200 °C, vorzugsweise 350 °C bis 950 °C, geregelt. Dennoch ist es anwendungsbezogen oder einzelfallbedingt nicht ausgeschlossen, von den vorgenannten Werten abzuweichen, ohne daß der Rahmen der vorliegenden Erfindung verlassen ist; dies zu entscheiden, liegt im fachmännischen Können bzw. im Ermessen des auf diesen Gebiet tätigen Fachmanns.

Gemäß einer besonderen Ausführungsform der vorliegenden Erfindung wird während der Carbonisierung, vorzugsweise am Einlaß oder in Verfahrensablaufrichtung am Beginn der Carbonisierung(seinrichtung), insbesondere am Einlaß oder in Verfahrensablaufrichtung am Begin des zweiten Abschnitts der Carbonisierungseinrichtung, Wasserdampf, insbesondere in Form eines Wasserdampf/Inertgas-Gemisches, eingesprüht oder eingedüst. Was dem Anteil des Wasserdampfes in dem Wasserdampf/Inertgas-Gemisch anbelangt, so kann dieser in weiten Bereichen variieren. Im allgemeinen wird der Anteil des Wasserdampfes in dem Wasserdampf/Inertgas-Gemisch im Bereich von 1 bis 30 Vol.-%, insbesondere 2 bis 20 Vol.-%, vorzugsweise 5 bis 15 Vol.-%, eingestellt. Dennoch ist es anwendungsbezogen oder einzelfallbedingt nicht ausgeschlossen, von den vorgenannten Werte abzuweichen, ohne daß der Rahmen der vorliegenden Erfindung verlassen ist; dies zu entscheiden, liegt im fachmännischen Können bzw. im Ermessen des auf diesem Gebiet tätigen Fachmanns.

Des weiteren hat es sich im Rahmen der vorliegenden Erfindung als vorteilhaft erwiesen, wenn während der Carbonisierung, vorzugsweise am Auslaß oder in Verfahrensablaufrichtung am Ende der Carbonisierung(seinrichtung), Sauerstoff, insbesondere in Form eines Sauerstoffgemisches mit mindestens einem weiteren Gas, vorzugsweise in Form von Luft, eingetragen oder eingedüst wird. Was den eingetragenen oder eingedüsten Volumenstrom an Sauerstoff bzw. eines Sauerstoffgemisches anbelangt, so kann dieser in weiten Bereichen variieren. Im allgemeinen ist der eingetragene oder eingedüste Volumenstrom an Sauerstoff, insbesondere in Form eines Sauerstoffgemisches mit mindestens einem weiteren Gas, vorzugsweise in Form von Luft, im Bereich von 10 bis 500 1/min, insbesondere 25 bis 250 1/min, vorzugsweise 50 bis 100 1/min, eingestellt. Dennoch ist es anwendungsbezogen oder einzelfallbedingt nicht ausgeschlossen, von den vorgenannten Werten abzuweichen, ohne daß der Rahmen der vorliegenden Erfindung verlassen ist; dies zu entscheiden, liegt im fachmännischen Können bzw. im Ermessen des auf diesem Gebiet tätigen Fachmanns.

Im allgemeinen wird im Anschluß an die Carbonisierung eine Behandlung der bei der Carbonisierung gebildeten Abgase durchgeführt. Hierbei kann es vorgesehen sein, daß die Abgasbehandlung mindestens eine thermische Nachverbrennung umfaßt. Gemäß einer besonders bevorzugten Ausführungsform der vorliegenden Erfindung werden im Anschluß an die Abgasbehandlung, insbesondere stromaufwärts zur thermischen Nachverbrennung, die aus der thermischen Nachverbrennung resultierenden Abgase, insbesondere mittels eines Wärmetauschers, abgekühlt. Gegebenenfalls folgt auf die Abkühlung der Abgase eine Trocknung der abgekühlten Abgase. Wiederum gegebenenfalls kann auf die Trocknung der Abgase eine Erwärmung der getrockneten Abgase folgen.

Gemäß einer besonders bevorzugten Ausführungsform der vorliegenden Erfindung umfaßt die Abgasbehandlung eine Oxidation, vorzugsweise eine katalytische Oxidation, der in den bei der Carbonisierung gebildeten Abgase enthaltenen Schwefeloxide, insbesondere Schwefeldioxid, zu Schwefeltrioxid, vorzugsweise stromabwärts zur thermischen Nachverbrennung und der gegebenenfalls durchgeführten Abkühlung, Trocknung und/oder Erwärmung. Dabei kann es vorgesehen sein, daß die Oxidation mittels und/oder in Gegenwart mindestens eines Oxidationskatalysators, bevorzugt auf Vanadium- und/oder Platinbasis, durchgeführt wird. Weiterhin kann es vorgesehen sein, daß das bei der Oxidation generierte Schwefeltrioxid in die Sulfonierung und/oder Peptisation zurückgeführt wird. Gegebenenfalls wird das bei der Oxidation generierte Schwefeltrioxid in die Sulfonierung und/oder Peptisation nach einem zwischengeschalteten Verfahrensschritt der Herstellung des Sulfonierungsmittels zurückgeführt.

Weiterhin hat es sich im Rahmen der vorliegenden Erfindung als besonders vorteilhaft erwiesen, wenn das bei der Oxidation generierte Schwefeltrioxid von den übrigen Bestandeilen der Abgase, insbesondere Kohlenstoffoxiden und/oder Wasserdampf und/oder Stickoxiden, abgetrennt wird. Hierbei kann es vorgesehen sein, daß nachgeschaltet zur Abtrennung gegebenenfalls eine Wäsche der abgetrennten übrigen Bestandeile der Abgase durchgeführt wird.

Der Carbonisierung schließt sich dann, gegebenenfalls nach einem zwischengeschalteten Klassierschritt des Carbonisats, eine Aktivierung des zuvor hergestellten Carbonisats an. Im allgemeinen wird die Aktivierung diskontinuierlich durchgeführt.

Darüber hinaus hat es sich erfindungsgemäß als vorteilhaft erwiesen, wenn die Aktivierung in einem geschlossenen System durchgeführt wird und/oder wenn die Aktivierung, insbesondere zu Beginn der Aktivierung und/oder zu Beginn der Aufheizphase, unter inerten Bedingungen durchgeführt wird.

Was die Temperatur während der Aktivierung anbelangt, so kann diese in weiten Bereichen variieren. Im allgemeinen wird die Temperatur während der Aktivierung im Bereich von 300 °C bis 1.800 °C, insbesondere 400 °C bis 1.500 °C, vorzugsweise 500 °C bis 1.250 °C, eingestellt. Dennoch ist es anwendungsbezogen oder einzelfallbedingt nicht ausgeschlossen, von den vorgenannten Werten abzuweichen, ohne daß der Rahmen der vorliegenden Erfindung verlassen ist; dies zu entscheiden, liegt im fachmännischen Können bzw. im Ermessen des auf diesem Gebiet tätigen Fachmanns.

Dabei kann es vorgesehen sein, daß die Temperatur während der Aktivierung stufenlos und/oder kontinuierlich, vorzugsweise mittels einer Heizeinrichtung, insbesondere einer elektrisch betriebenen Heizung, eingestellt wird.

Gemäß einer besonders bevorzugten Ausführungsform der vorliegenden Erfindung wird während der Aktivierung mindestens ein Aktivierungsgas, insbesondere Wasserdampf und/oder Kohlendioxid und/oder Sauerstoff und/oder Ammoniak, eingetragen, insbesondere eingedüst und/oder eingeblasen.

Dabei kann es im Rahmen der vorliegenden Erfindung vorgesehen sein, daß das in die Aktivierung eingetragene Aktivierungsgas auf eine definierte Temperatur aufgeheizt wird.

Bei Verwendung mehrerer, verschiedener Aktivierungsgase können diese gleichzeitig oder zeitlich versetzt in die Aktivierung eingetragen werden, wobei ein zeitlich versetztes Eintragen im Rahmen der vorliegenden Erfindung bevorzugt ist. Auch können die Aktivierungsgase bei gleichen oder unterschiedlichen Temperaturen eingetragen werden.

Erfindungsgemäß kann während der Aktivierung als Aktivierungsgas wenigstens Wasserdampf, insbesondere in Form eines Wasserdampf/Inertgas-Gemisches, eingetragen, insbesondere eingedüst, eingesprüht und/oder eingeblasen, werden.

Was den Anteil des Wasserdampfes in dem Wasserdampf/Inertgas-Gemisch anbelangt, so kann dieser in weiten Bereichen variieren. Im allgemeinen wird der Anteil des Wasserdampfes in den Wasserdampf/Inertgas-Gemisch im Bereich von 5 bis 70 Vol.-%, insbesondere 10 bis 50 Vol.-%, vorzugsweise 15 bis 40 Vol.-%, eingestellt. Dennoch ist es anwendungsbezogen oder einzelfallbedingt nicht ausgeschlossen, von den vorgenannten Werten abzuweichen, ohne daß der Rahmen der vorliegenden Erfindung verlassen ist; dies zu entscheiden, liegt im fachmännischen Können bzw. im Ermessen des auf diesem Gebiet tätigen Fachmanns. Dabei kann es vorgesehen sein, daß der Wasserdampf während der Aktivierung bei Temperaturen ab 500 °C eingedüst, eingesprüht und/oder eingeblasen wird.

Des weiteren hat es sich ebenfalls im Rahmen der vorliegenden Erfindung als vorteilhaft erwiesen, wenn während der Aktivierung als Aktivierungsgas, insbesondere zusätzlich zu Wasserdampf als Aktivierungsgas, Kohlendioxid, insbesondere in Form eines Kohlendioxid/Inertgas-Gemisches, eingetragen, insbesondere eingedüst, eingesprüht und/oder eingeblasen, wird. Dabei kann es vorgesehen sein, daß das Kohlendioxid bei Temperaturen ab 800 °C, eingedüst, eingesprüht und/oder eingeblasen wird.

Wie bei den Ausführungen zu der erfindungsgemäßen Vorrichtung bereits geschildert, beeinflussen die Temperaturen und der Kohlenstoffdioxidgehalt während der Aktivierung das Abbrandverhalten des zu aktivierenden Materials und somit die Materialeigenschaften der resultierenden Aktivkohle.

Gemäß einer besonderen Ausführungsform der vorliegenden Erfindung wird das mindestens eine Aktivierungsgas über eine Einführeinrichtung aus einem Bevorratungsbehältnis in die Aktivierung eingespeist.

Im allgemeinen wird im Anschluß an die Aktivierung eine Behandlung der bei der Aktivierung gebildeten Abgase durchgeführt. Dabei kann es vorgesehen sein, daß die Abgasbehandlung mindestens eine thermische Nachverbrennung umfaßt.

Erfindungsgemäß kann im Anschluß an die thermische Nachverbrennung eine Wäsche der aus der thermischen Nachverbrennung stammenden Abgase durchgeführt werden. Nach Durchgang durch den Wäscher werden die Abgase, welche aufgrund der thermischen Nachverbrennung überwiegend aus Kohlendioxid und Wasserdampf bestehen, emittiert. Es werden jedoch nur überschüssige Abgase direkt der Wäsche zugeführt, während er überwiegende Teil als Energielieferant in den verschiedenen Prozessen der Aktivkohleherstellung genutzt wird.

Gemäß einer besonders bevorzugten Ausführungsform der vorliegenden Erfindung werden die aus der Abgasbehandlung (d. h. Abgasbehandlung der aus der Aktivierung stammenden Abgase), insbesondere aus der thermischen Nachverbrennung, stammenden Abgase zur insbesondere indirekten Beheizung für die Aktivierung(seinrichtung) und/oder zur Aufheizung des mindestens einen Aktivierungsgases und/oder für die Trocknung, insbesondere zur Erzeugung einer Wirbelschicht, verwendet. Für weitergehende Einzelheiten zur Verwendung der aus der Aktivierung stammenden Abgase, insbesondere nach Passieren der thermischen Nachverbrennung, kann auf die obigen Erläuterungen zur erfindungsgemäßen Vorrichtung verwiesen werden.

Wie zuvor ausgeführt, wird im Fall ungetrockneter bzw. feuchter Ausgangsmaterialien vor der eigentlichen Aktivkohleherstellung ein Trocknungsschritt (a) vorgeschaltet. Erfindungsgemäß kann die Trocknung in einer Wirbelschicht durchgeführt werden, bevorzugt kann die Trocknung, insbesondere deren Wirbelschicht, mittels aus der Abgasbehandlung (d. h. der Abgasbehandlung der aus der Aktivierung stammenden Abgase), insbesondere aus der thermischen Nachverbrennung, stammender Abgase betrieben werden. Insbesondere kann im Rahmen der vorliegenden Erfindung die Trocknung diskontinuierlich betrieben werden. Was die Temperaturen bei der Trocknung anbelangt, so kann diese in weiten Bereichen variieren. Im allgemeinen wird die Trocknung bei Temperaturen im Bereich von 100 °C bis 400 °C, insbesondere 100 °C bis 200 °C, betrieben. Dennoch ist es anwendungsbezogen oder einzelfallbedingt nicht ausgeschlossen, von den vorgenannten Werten abzuweichen, ohne daß der Rahmen der vorliegenden Erfindung verlassen ist; dies zu entscheiden, liegt im fachmännischen Können bzw. im Ermessen des auf diesem Gebiet tätigen Fachmanns.

Wie zuvor ausgeführt, ist bei unsulfonierten Ausgangsmaterialien vor der Carbonisierung ein Verfahrensschritt der Sulfonierung und/oder Peptisation vorgeschaltet. Im Rahmen dieses Verfahrensschritts erfolgt die eigentliche Sulfonierung (d. h. das Einbringen von Sulfonsäuregruppen) sowie gegebenenfalls die Peptisation (d. h. das Herauslösen von im Ausgangsmaterial verbliebener monomerer, dimerer und oligomerer Einheiten und das Abscheiden derselben auf der äußeren Oberfläche der Teilchen des Ausgangsmaterials). Insbesondere kann im Rahmen der vorliegenden Erfindung die Sulfonierung und/oder Peptisation diskontinuierlich betrieben werden.

Was die Temperatur der Sulfonierung bzw. Peptisation anbelangt, so kann diese in weiten Bereichen variieren. Im allgemeinen wird die Sulfonierung bzw. Peptisation bei Temperaturen im Bereich von 25 °C bis 400 °C, insbesondere 50 °C bis 300 °C, betrieben. Dennoch ist es anwendungsbezogen oder einzelfallbedingt nicht ausgeschlossen, von den vorgenannten Werten abzuweichen, ohne daß der Rahmen der vorliegenden Erfindung verlassen ist; dies zu entscheiden, liegt im fachmännischen Können bzw. im Ermessen des auf diesem Gebiet tätigen Fachmanns.

Gemäß einer besonders bevorzugten Ausführungsform der vorliegenden Erfindung kann zwischen Carbonisierungsschritt und Aktivierungsschritt außerdem ein Verfahrensschritt des Klassierens des aus der Carbonisierung stammenden Carbonisats durchgeführt werden.

Für weitergehende Einzelheiten zu dem erfindungsgemäßen Verfahren kann auf die obigen Ausführungen zu der erfindungsgemäßen Vorrichtung bzw. Anlage verwiesen werden, welche in bezug auf das erfindungsgemäße Verfahren entsprechend gelten.

Die erfindungsgemäße Vorrichtung (Anlage) sowie das erfindungsgemäße Verfahren besitzen eine Reihe von Vorteilen, welche sie gegenüber dem Stand der Technik auszeichnen:
Durch die Oxidation der schwefelhaltigen Verbindungen zu Schwefeltrioxid und dessen Rückführung in die Sulfonierung wird der Ausstoß an schwefelhaltigen Abgasen, welche andernfalls aufwendig und kostenintensiv gereinigt werden müßten, weitestgehend vermieden.

Ein Großteil des eingesetzten Sulfonierungsmittels kann zurückgewonnen werden, so daß nur ein kleiner Teil des Sulfonierungsmittels tatsächlich verbraucht wird und ersetzt werden muß.

Durch die Rückgewinnung des Sulfonierungsmittels wird darüber hinaus die Gesamtmenge aller entstehenden Abgase, insbesondere der korrosiven sauren Abgase, drastisch reduziert.

Durch die thermische Nachverbrennung der bei der Carbonisierung bzw. Aktivierung gebildeten Abgase bestehen die Abgase nach Entfernung der schwefelhaltigen Verbindungen fast ausschließlich aus den unbedenklichen Verbrennungsrückständen Kohlendioxid und Wasserdampf.

Die Nachverbrennung erzeugt Wärme, durch die der Energiebedarf der Aktivkohleherstellung deutlich gesenkt werden kann; so kann z. B. der Energiebedarf des Verfahrensschrittes der Aktivierung durch die thermische Nachverbrennung der entstehenden Abgase um mindestens 10 % bis 20 % gesenkt werden.

Aus der thermischen Nachverbrennung stammende, heiße Abgase können darüber hinaus auch zur Beheizung der Aktivierungsgase oder zur Trocknung der für die Aktivkohleherstellung eingesetzten Ausgangsmaterialien verwendet werden.

Die Klassierung der Rohaktivkohle vor der Aktivierung ermöglicht ein Trennen oder aber auch ein gezieltes Mischen der einzelnen Klassen, so daß die resultierende Aktivkohle optimal an den beabsichtigten Verwendungszweck angepaßt werden kann.

Mit der erfindungsgemäßen Vorrichtung bzw. mit dem erfindungsgemäßen Verfahren kann der SO₂-Ausstoß während der Carbonisierung derart konstant gehalten werden, daß die Durchführung eines Verfahrens zur Schwefeltrioxidherstellung und somit eine Zurückgewinnung des Sulfonierungsmittels ermöglicht wird.

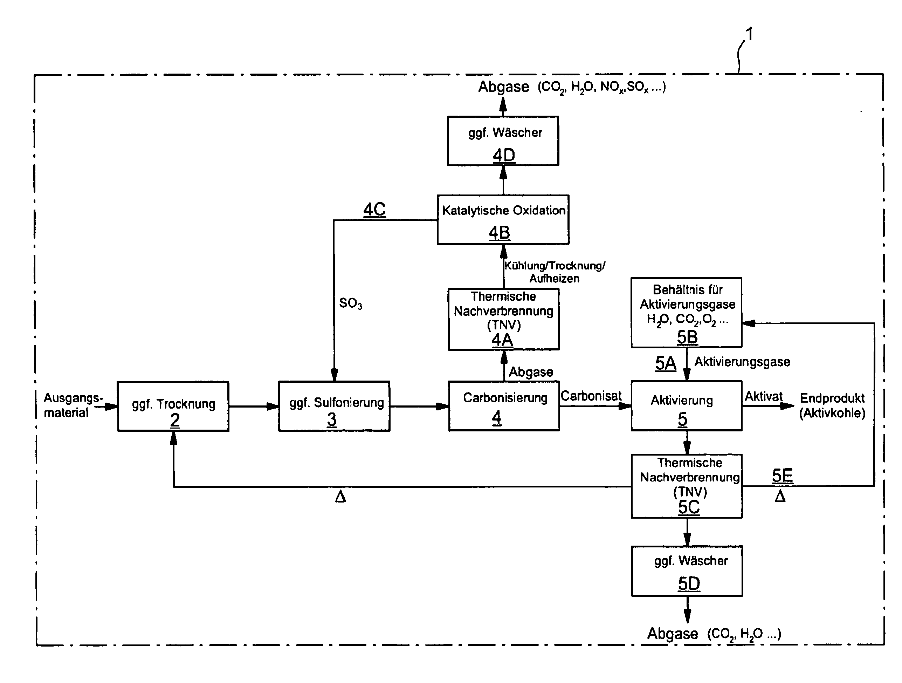

Die einzige Figur zeigt in schematischer und beispielhafter Darstellung eine typische, bevorzugte Ausführungsform der erfindungsgemäßen Vorrichtung 1 bzw. des erfindungsgemäßen Verfahrensablaufs:
Wie die Figur zeigt, wird für den Fall, daß von nichtgetrocknetem bzw. feuchtem Ausgangsmaterial ausgegangen wird, in 2 zunächst gegebenenfalls eine Trocknung, vorzugsweise in einer Wirbelschicht, durchgeführt, woran sich im Fall unsulfonierter Ausgangsmaterialien dann bei 3 gegebenenfalls eine Sulfonierung und/oder Peptisation anschließt. Das getrocknete und sulfonierte bzw. peptisierte Ausgangsmaterial, z. B. auf Basis sulfonierter Styrol/Divinylbenzol-Polymere, z. B. in Form von sogenannten sulfonierten Ionenaustauscherharzen vom Geltyp oder vom makroporösen Typ, wird dann nachfolgend bei 4 der Carbonisierung unterworfen, woraufhin das aus dieser Stufe resultierende Carbonisat der Aktivierung bei 5 unterzogen wird, so daß das gewünschte Endprodukt (d. h. Aktivkohle) resultiert. Wie die Figur weiter zeigt, werden die aus der Carbonisierung 4 stammenden, insbesondere sauren Abgase zunächst bei 4A einer thermischen Nachverbrennung (TNV) unterworfen und nachfolgend - gegebenenfalls nach Kühlung, Trocknung und erneutem Aufheizen dieser Gase - bei 4B einer katalytischen Oxidation, insbesondere in Gegenwart von Vanadiumpentoxid als Oxidationskatalysator, unterworfen, so daß im Abgas vorhandenes Schwefeldioxid SO₂ zu Schwefeltrioxid SO₃ umgesetzt wird, welches über 4C wieder der Sulfonierung 3 zurückgeführt werden kann, insbesondere in Form von konzentrierter Schwefelsäure bzw. Oleum. Die übrigen Abgase aus der katalytischen Oxidation 4B dagegen werden, gegebenenfalls nach einer weiteren nachgeschalteten Wäsche 4D, dann emittiert, wobei es sich hierbei im wesentlichen um Kohlendioxid CO₂, Wasserdampf H₂O und in nur noch sehr untergeordneten Mengen um Stickoxide NOₓ und Schwefeloxide SOₓ handelt.

Die aus der Aktivierung 5 stammenden Abgase, insbesondere Wasserstoff H₂ und Kohlenmonoxid CO, werden gleichermaßen einer thermischen Nachverbrennung (TNV) 5C unterzogen, wobei die aus der thermischen Nachverbrennung stammenden, noch heißen Abgase einerseits genutzt werden können, um die Aktivierungseinrichtung 5 mitzubeheizen, und andererseits, um die Aktivierungsgase bzw. das betreffende Behältnis für die Aktivierungsgase, insbesondere Wasserdampf, bei 5B aufzuheizen, wobei die erhitzten Aktivierungsgase, insbesondere Wasserdampf, dann über 5A der Aktivierung zugeführt werden, und schließlich auch, um die erforderliche Wärme und die Wirbelschicht für die Trocknungsstufe 2 zu liefern. Die gegebenenfalls nicht genutzten Abgase aus der thermischen Nachverbrennung (TNV) 5C können dann, gegebenenfalls nach einem Wäscher 5D, als Abgase, insbesondere hauptsächlich bestehend aus Kohlendioxid CO₂ und Wasserdampf H₂O etc., emittiert werden.

Gemäß einer typischen Ausführungsform der vorliegenden Erfindung kann die erfindungsgemäße Vorrichtung bzw. das erfindungsgemäße Verfahren wie folgt ausgestaltet sein:

Das Ausgangsmaterial, beispielsweise Styrol/Divinylbenzol-Copolymere, insbesondere Ionenaustauscher vom Geltyp oder vom makroporösen Typ, werden - sofern sie in nichtgetrockneter bzw. feuchter Form vorliegen - in einer ersten Stufe einer Trocknung unterworfen, wobei die Trocknung des Ausgangsmaterials vorzugsweise in einer Wirbelschicht, bevorzugt unter Abwärmenutzung aus der Aktivierung, erfolgt. Üblicherweise erfolgt die Trocknung diskontinuierlich bzw. chargenweise (batchweise) (z. B. 1 m³ Ausgangsmaterial pro Charge).

Im Falle unsulfonierter Ausgangsmaterialien werden diese in einer zweiten, der Trocknung nachgeschalteten Stufe einer Sulfonierung und/oder Peptisation unterworden. Zu diesem Zweck werden die Ausgangspolymere bzw. Ionentauscher mit einem geeigneten Sulfonierungsmittel, insbesondere konzentrierter Schwefelsäure bzw. Oleum (z. B. Oleum 15 %) in Kontakt gebracht, insbesondere bei Temperaturen von 100 °C bis 400 °C, bevorzugt 150 bis 250 °C. Je nach gewünschtem Porensystem können unterschiedliche Mengenverhältnisse an Sulfonierungsmittel eingesetzt werden und beispielsweise nach einer vom Fachmann auswählbaren Temperaturkennlinie abreagiert werden, bis das Ausgangsmaterial sulfoniert ist und in rieselfähiger Form vorliegt. Im Rahmen dieser Stufe wird nicht nur eine Sulfonierung, sondern im allgemeinen auch eine sogenannte Peptisation erreicht, d. h. Monomer-, Dimer- und Oligomerreste werden aus den Ausgangsmaterialien herausgelöst und anschließend auf der Oberfläche der Partikel wieder angelagert, wobei diese Wiederanlagerungen im Zuge der nachfolgenden Carbonisierung eine sehr harte und folglich abriebfeste Pseudographitschicht auf der Oberfläche der Partikel bilden.

In einer nachgeschalteten, dritten Verfahrensstufe erfolgt dann die Carbonisierung bzw. Pyrolyse des trockenen und sulfonierten Ausgangsmaterials, wobei die Carbonisierung bevorzugt kontinuierlich bzw. quasi-kontinuierlich, insbesondere in einem geschlossenen System, betrieben wird. Üblicherweise erfolgt die Carbonisierung unter inerten Reaktionsbedingungen. Hierbei kann das Material typischerweise auf eine beheizbare Vibrationsrinne aufgegeben werden, üblicherweise unter Inertgasatmosphäre, wobei hierdurch das Material, beispielsweise innerhalb von 60 Minuten, z. B. auf 350 °C erhitzt werden kann. Diese Vibrationsrinne übergibt dann in einen ebenfalls kontinuierlich bzw. quasi-kontinuierlich betriebenen Drehrohrofen mit einer Temperatur an der Einlaufseite typischerweise von 400 °C. Im Laufe des Transports im Drehrohr wird dann das Material über typischerweise sechs bis acht Heizzonen auf z. B. 900 °C aufgeheizt. Bevorzugt ist die gleichzeitige Zugabe von Wasserdampf, vorzugsweise eines entsprechenden Stickstoff/Wasserdampf Gemisches (z. B. 10 bis 30 Vol.-% Wasserdampf), von der Ofeneinlaufseite und die Zugabe von Luft bzw. Sauerstoff (z. B. 50 bis 100 1/min) von der Ofenauslaufseite, um die Verbrennung entstehender Pyrolysegase im Reaktionsrohr zu ermöglichen. Damit können mehrere positive Effekte erreicht werden: Zum einen wird ein Kondensieren von Pyrolysegasen im Basisporensystem des Ausgangsmaterials weitgehend verhindert, und zum anderen kann durch die Verbrennung im Reaktionsrohr der Wärmeinhalt genutzt werden, und der Eintrag an elektrischer Leistung in die Ofenbeheizung kann minimiert werden. Nach Abschluß der Carbonisierung bzw. Pyrolyse ist das Material typischerweise zugänglich und hat eine innere Oberfläche (BET) von beispielsweise 400 bis 800 m²/g. Entsprechend den Ausgangsmaterialien ist es bevorzugt, wenn die Partikelform kugelförmig ist.

In einer nachgeschalteten, vierten Stufe erfolgt dann die Aktivierung des zuvor hergestellten Carbonisats. Bei der Aktivierung wird das Material, bevorzugt nach vorheriger Klassierung, in enge Kornfraktionen in einen Drehrohrofen mit Einbauten gefüllt und unter Inertatmosphäre beispielsweise auf ca. 960 °C aufgeheizt, wobei beispielsweise ab ca. 600 °C der Atmosphäre Wasserdampf (z. B. 20 bis 30 Vol.-%), bevorzugt in Form eines Stickstoff/Wasserdampf-Gemisches, zugesetzt werden kann. Je nach gewünschtem Aktivierungsgrad und je nach gewünschtem Porensystem kann der Atmosphäre beispielsweise ab ca. 900 °C Kohlendioxid CO₂ zugesetzt werden und/oder die Temperatur variiert werden, beispielsweise um das Abbrandverhalten zu beeinflussen. Die bei der Aktivierung entstehenden Gase, insbesondere Wasserstoff H₂ und Kohlenmonoxid CO, können vorteilhafterweise zur indirekten Beheizung des Aktivierungsrohres genutzt werden. Damit können ca. 20 % des Gesamtenergiebedarfs der Anlage aus dem Prozeß ausgekoppelt werden.

Was die Abgasbehandlung anbelangt, so können die aus der Carbonisierung bzw. Pyrolyse stammenden Abgase zunächst einer thermischen Nachverbrennung (TNV), insbesondere über Luftüberschuß, nachverbrannt werden, um alle organischen Bestandteile zu oxidieren; anschließend wird das SO₂-reiche Abgas vorteilhafterweise in einen Wärmetauscher geleitet und gekühlt, um es in einer Gastrocknung mittels Schwefelsäure entfeuchten zu können, und nach anschließendem Aufheizen, beispielsweise auf Temperaturen von ca. 480 °C, kann das Gas über mehrere Stufen eines Oxidationskatalysators (z. B. vanadiumbasierter Oxidationskatalysator, z. B. Vanadiumpentoxid) geführt werden, bis das Schwefeldioxid SO₂ zu Schwefeltrioxid SO₃ oxidiert ist. Nachdem sämtliches SO₂ zu SO₃ oxidiert ist, wird das SO₃-haltige Abgas typischerweise wiederum gekühlt und das SO₃ mittels konzentrierter Schwefelsäure ausgewaschen, so daß es in die Sulfonierung zurückgeführt werden kann. Somit ist ein vollständiger Kreislauf an Sulfonierungsmitteln realisiert und keine aufwendige Entsorgung erforderlich. Damit das Konzept ökonomisch und ökologisch realisierbar ist, ist es von Vorteil, wenn die anfallenden Abgasmengen relativ konstant sind, was dadurch realisiert werden kann, daß die SO₂-relevanten Verfahrensschritte, insbesondere die Carbonisierung bzw. Pyrolyse, kontinuierlich bzw. quasi-kontinuierlich ausgestaltet wird und der SO₂-Ausstoß in etwa konstant, d. h. ohne Spitzen des SO₂-Ausstoßes, gehalten wird.

Was dagegen die Abgasbehandlung der aus der Aktivierung stammenden Abgase anbelangt, so kann die Behandlung in der zuvor beschriebenen Art und Weise erfolgen (d. h. thermische Nachverbrennung und Verwendung der au der thermischen Nachverbrennung stammenden Abgase zum Aufheizen der Aktivierungsgase, insbesondere Wasserdampf, und/oder zur indirekten Beheizung des Aktivierungsofens und/oder zur Nutzung für die Trocknung im Rahmen der Wirbelschicht).

Weiterer Gegenstand der vorliegenden Erfindung - gemäß einem **dritten** Aspekt der vorliegenden Erfindung - ist schließlich die Verwendung der erfindungsgemäßen Vorrichtung, wie sie zuvor beschrieben worden ist, zur Herstellung von Aktivkohle. Wie zuvor beschrieben, erfolgt die Herstellung der Aktivkohle im Rahmen der erfindungsgemäßen Verwendung durch Carbonisierung und nachfolgende Aktivierung polymerer organischer, vorzugsweise sulfonierter Ausgangsmaterialien. Für weitergehende Einzelheiten zu der erfindungsgemäßen Verwendung kann auf die obigen Ausführungen zu der erfindungsgemäßen Vorrichtung bzw. Anlage und dem erfindungsgemäßen Verfahren verwiesen werden, welche in bezug auf die erfindungsgemäße Verwendung entsprechend gelten.

## Patentansprüche

1. Vorrichtung (Anlage) (1) zur Herstellung von Aktivkohle, insbesondere durch Carbonisierung und nachfolgende Aktivierung polymerer organischer sulfonierter Ausgangsmaterialien, wobei die Vorrichtung
- gegebenenfalls eine Trocknungseinrichtung (2) zur Trocknung der Ausgangsmaterialien,
- gegebenenfalls eine Sulfonierungseinrichtung (3) zur Sulfonierung und/oder Peptisation der gegebenenfalls zuvor getrockneten Ausgangsmaterialien stromabwärts zur gegebenenfalls vorhandenen Trocknungseinrichtung (2) angeordnet,
- eine Carbonisierungseinrichtung (4) zur Carbonisierung der gegebenenfalls zuvor getrockneten und/oder sulfonierten und/oder peptisierten Ausgangsmaterialien, stromabwärts zur gegebenenfalls vorhandenen Trocknungseinrichtung (2) und/oder zur gegebenenfalls vorhandenen Sulfonierungseinrichtung (3) angeordnet, wobei die Temperatur der Carbonisierungseinrichtung (4) im Betrieb regelbar ist derart, daß mindestens zwei Temperaturzonen mit stromaufwärts jeweils ansteigender Temperatur der einzelnen Temperaturstufen vorliegen oder aber ein Temperaturgradient mit stromaufwärts ansteigendem Temperaturprofil vorliegt,
- eine stromabwärts zur Carbonisierungseinrichtung (4) angeordnete Aktivierungseinrichtung (5) zur Aktivierung der zuvor in der Carbonisierungseinrichtung (4) carbonisierten Ausgangsmaterialien
aufweist, wobei die Vorrichtung (1) außerdem mindestens eine Abgasbehandlungseinrichtung (4A, 4B, 4D) zur Behandlung der in der Carbonisierungseinrichtung (4) im Betrieb gebildeten Abgase einerseits und mindestens eine Abgasbehandlungseinrichtung (5C, 5D) zur Behandlung der in der Aktivierungseinrichtung (5) im Betrieb gebildeten Abgase andererseits umfaßt, wobei an die Carbonisierungseinrichtung (4) eine Abgasbehandlungseinrichtung (4A, 4B, 4D) zur Behandlung der in der Carbonisierungseinrichtung (4) im Betrieb gebildeten Abgase angeschlossen und/oder nachgeschaltet ist, wobei die Abgasbehandlungseinrichtung (4A, 4B, 4D) mindestens eine thermische Nachverbrennung (4A) umfaßt, und wobei an die Aktivierungseinrichtung (5) eine Abgasbehandlungseinrichtung (5C, 5D) zur Behandlung der in der Aktivierungseinrichtung (5) im Betrieb gebildeten Abgase angeschlossen und/oder nachgeschaltet ist, wobei die Abgasbehandlungseinrichtung (5C, 5D) mindestens eine thermische Nachverbrennung (5C) umfaßt, und wobei die aus der Abgasbehandlungseinrichtung (5C, 5D) stammenden Abgase zur Beheizung der Aktivierungseinrichtung (5) und/oder über eine Zuführleitung (5E) zur Aufheizung eines mindestens ein Aktivierungsgas enthaltenden Bevorratungsbehältnisses (5B) oder mindestens eines Aktivierungsgases und/oder für die Beheizung der gegebenenfalls vorhandenen Trocknungseinrichtung (2) verwendbar ist

2. Vorrichtung nach Anspruch 1,
wobei die Carbonisierungseinrichtung (4) mindestens ein Drehrohr, insbesondere mindestens einen Drehrohrofen, umfaßt und/oder
wobei die Carbonisierungseinrichtung (4) ein geschlossenes System bildet und/oder wobei die Carbonisierungseinrichtung (4) unter inerten Bedingungen betreibbar ist und/oder
wobei die Carbonisierungseinrichtung (4) kontinuierlich oder quasikontinuierlich betreibbar ist und/oder wobei die Temperatur der Carbonisierungseinrichtung (4) im Betrieb kontinuierlich oder stufenweise regelbar ist und/oder
wobei die Temperatur der Carbonisierungseinrichtung (4) im Betrieb im Bereich von 20 °C bis 1.200 °C, insbesondere 30 °C bis 1.100 °C, vorzugsweise 50 °C bis 1.000 °C, regelbar ist, insbesondere wobei eine erste, vorzugsweise am Einlaß oder in Verfahrensablaufrichtung am Beginn der Carbonisierungseinrichtung (4) befindliche Temperaturzone im Betrieb im Bereich von 50 °C bis 500 °C, insbesondere 200 °C bis 450 °C, einstellbar ist und/oder insbesondere wobei eine weitere, vorzugsweise am Auslaß oder Ende der Carbonisierungseinrichtung (4) befindliche Temperaturzone im Betrieb im Bereich von 800 °C bis 1.200 °C, insbesondere 850 °C bis 950 °C, einstellbar ist.

3. Vorrichtung nach Anspruch 1 oder 2, wobei die Carbonisierungseinrichtung (4) in mindestens zwei Abschnitte unterteilt ist, insbesondere wobei ein erster, vorzugsweise stromaufwärts angeordneter Abschnitt durch eine beheizbare Vibrationsrinne gebildet ist und ein zweiter, vorzugsweise stromabwärts zum ersten Abschnitt angeordneter Abschnitt durch ein Drehrohr, vorzugsweise einen Drehrohrofen, insbesondere mit im Betriebszustand in Verfahrensablaufrichtung ansteigendem Temperaturprofil oder Temperaturgradienten, gebildet ist, insbesondere wobei der erste Abschnitt mit konstanter Temperatur einstellbar ausgebildet oder mit in Verfahrensablaufrichtung ansteigendem Temperaturprofil oder Temperaturgradienten regelbar ausgebildet ist und/oder insbesondere wobei der zweite Abschnitt mit in Verfahrensablaufrichtung ansteigendem Temperaturprofil oder Temperaturgradienten regelbar ausgebildet ist und/oder insbesondere wobei die Temperatur in dem in Verfahrensablaufrichtung ersten Abschnitt der Carbonisierungseinrichtung (4) kontinuierlich oder stufenweise regelbar ist, insbesondere im Bereich von 50 °C bis 500 °C, vorzugsweise 200 °C bis 450 °C und/oder insbesondere wobei die Temperatur in dem in Verfahrensablaufrichtung zweiten Abschnitt der Carbonisierungseinrichtung (4) in Verfahrensablaufrichtung ansteigend, insbesondere stufenweise oder stufenlos ansteigend, insbesondere in mehreren Temperaturzonen oder mit einem Temperaturgradienten ansteigend, regelbar ist, insbesondere im Bereich von 300 °C bis 1.200 °C, vorzugsweise 350 °C bis 950 °C.

4. Vorrichtung nach einem der vorangehenden Ansprüche,
wobei die Carbonisierungseinrichtung (4), vorzugsweise am Einlaß oder in Verfahrensablaufrichtung am Beginn der Carbonisierungseinrichtung (4), insbesondere am Einlaß oder in Verfahrensablaufrichtung am Beginn des zweiten Abschnitts der Carbonisierungseinrichtung (4), eine Einsprüh- oder Eindüseeinrichtung zum Einsprühen oder Eindüsen von Wasserdampf, insbesondere in Form eines Wasserdampf/Inertgas-Gemisches, aufweist, insbesondere wobei der Anteil des Wasserdampfes in dem Wasserdampf/Inertgas-Gemisch im Bereich von 1 bis 30 Vol.-%, insbesondere 2 bis 20 Vol.-%, vorzugsweise 5 bis 15 Vol.-%, einstellbar ist und/oder
wobei die Carbonisierungseinrichtung (4), vorzugsweise am Auslaß oder in Verfahrensablaufrichtung am Ende der Carbonisierungseinrichtung (4), eine Eindüseeinrichtung zum Eintragen von Sauerstoff, insbesondere in Form eines Sauerstoffgemisches mit mindestens einem weiteren Gas, vorzugsweise in Form von Luft, aufweist, insbesondere wobei der eingedüste Volumenstrom im Bereich von 10 bis 500 1/min, insbesondere 25 bis 250 l/min, vorzugsweise 50 bis 100 1/min, einstellbar ist.

5. Vorrichtung nach einem der vorangehenden Ansprüche,
wobei die Abgasbehandlungseinrichtung (4A, 4B, 4D), insbesondere stromaufwärts zur thermischen Nachverbrennung (4A), mindestens einen Wärmetauscher zum Abkühlen der aus der thermischen Nachverbrennung resultierenden Abgase aufweist, gegebenenfalls nachgeschaltet hierzu eine Trocknungseinrichtung zur Trocknung der abgekühlten Abgase und gegebenenfalls wiederum nachgeschaltet hierzu eine Aufheizeinrichtung zur Erwärmung der getrockneten Abgase, und/oder
wobei die Abgasbehandlungseinrichtung (4A, 4B, 4D) eine Oxidationseinrichtung (4B) zur vorzugsweise katalytischen Oxidation der in den in der Carbonisierungseinrichtung (4) im Betrieb gebildeten Abgase enthaltenen Schwefeloxide, insbesondere Schwefeldioxid, zu Schwefeltrioxid umfaßt, vorzugsweise stromabwärts zur thermischen Nachverbrennung (4A) und den gegebenenfalls vorgesehenen Wärmetauscher, Trocknungseinrichtung und/oder Aufheizeinrichtung, insbesondere wobei die Oxidationseinrichtung (4B) mindestens einen Oxidationskatalysator, bevorzugt auf Vanadium- und/oder Platinbasis, aufweist und/oder insbesondere wobei die Oxidationseinrichtung (4B) eine Rückführeinrichtung (4C) für die Rückführung des Schwefeltrioxids in die Sulfonierungseinrichtung (3), gegebenenfalls über eine zwischengeschaltete Herstelleinrichtung für das Sulfonierungsmittel, aufweist, insbesondere wobei die eine Oxidationseinrichtung (4B) eine Abtrenneinrichtung zum Abtrennen des Schwefeltrioxids von den übrigen Bestandeilen der Abgase, insbesondere Kohlenstoffoxiden und/oder Wasserdampf und/oder Stickoxiden, aufweist, insbesondere wobei nachgeschaltet zur Abtrenneinrichtung gegebenenfalls ein Wäscher (4D) zur Wäsche der abgetrennten übrigen Bestandeile der Abgase vorgesehen ist.

6. Vorrichtung nach einem der vorhergehenden Ansprüche,
wobei die Aktivierungseinrichtung (5) diskontinuierlich betreibbar ist und/oder
wobei die Aktivierungseinrichtung (5) ein geschlossenes System bildet und/oder wobei die Aktivierungseinrichtung (5), insbesondere zu Beginn der Aktivierung und/oder zu Beginn der Aufheizphase, unter inerten Bedingungen betreibbar ist und/oder
wobei die Temperatur der Aktivierungseinrichtung (5) im Betrieb im Bereich von 300 °C bis 1.800 °C, insbesondere 400 °C bis 1.500 °C, vorzugsweise 500 °C bis 1.250 °C regelbar ist, insbesondere stufenlos und/oder kontinuierlich, insbesondere wobei die Aktivierungseinrichtung (5) mindestens eine Heizeinrichtung, insbesondere eine elektrisch betriebene Heizung, aufweist.

7. Vorrichtung nach einem der vorhergehenden Ansprüche, wobei die Aktivierungseinrichtung (5) mindestens eine Einführeinrichtung (5A) zum Eintragen, insbesondere Eindüsen und/oder Einblasen, mindestens eines Aktivierungsgases, insbesondere Wasserdampf und/oder Kohlendioxid und/oder Sauerstoff und/oder Ammoniak, aufweist, insbesondere wobei die Einführeinrichtung (5A) mindestens eine Temperatursteuerungseinrichtung zur Einstellung des in die Aktivierungseinrichtung (5) einzutragenden Aktivierungsgases aufweist, insbesondere wobei die Einführeinrichtung (5A) mindestens eine Einführeinrichtung zum Eintragen, insbesondere Eindüsen, Einsprühen und/oder Einblasen, von Wasserdampf, insbesondere in Form eines Wasserdampf/Inertgas-Gemisches, aufweist, insbesondere wobei der Anteil des Wasserdampfes in dem Wasserdampf/Inertgas-Gemisch im Bereich von 5 bis 70 Vol.-%, insbesondere 10 bis 50 Vol.-%, vorzugsweise 15 bis 40 Vol.-%, einstellbar ist und/oder insbesondere wobei der Wasserdampf bei Temperaturen ab 500 °C eindüsbar, einsprühbar und/oder einblasbar ist und/oder insbesondere wobei die Einführeinrichtung (5A) mindestens eine Einführeinrichtung zum Eintragen, insbesondere Eindüsen, Einsprühen und/oder Einblasen, von Kohlendioxid, insbesondere in Form eines Kohlendioxid/Inertgas-Gemisches, aufweist, insbesondere wobei das Kohlendioxid bei Temperaturen ab 800 °C eindüsbar, einsprühbar und/oder einblasbar ist und/oder insbesondere wobei die Einführeinrichtung (5A) von mindestens einem Bevorratungsbehältnis (5B), welches das mindestens eine Aktivierungsgas enthält, gespeist wird und/oder hieran angeschlossen ist.

8. Vorrichtung nach einem der vorhergehenden Ansprüche,
wobei die Trocknungseinrichtung (2) in einer Wirbelschicht betreibbar ist und/oder wobei die Trocknungseinrichtung (2), insbesondere deren Wirbelschicht, mittels aus der Abgasbehandlungseinrichtung (5C, 5D), insbesondere aus der thermischen Nachverbrennung (5C), stammender Abgase betreibbar und/oder beheizbar ist und/oder
wobei die Trocknungseinrichtung (2) diskontinuierlich betreibbar ist und/oder wobei die Trocknungseinrichtung (2) bei Temperaturen im Bereich von 100 °C bis 400 °C, insbesondere 100 °C bis 200 °C, betreibbar ist und/oder
wobei die Sulfonierungseinrichtung (3) diskontinuierlich betreibbar ist und/oder wobei die Sulfonierungseinrichtung (3) bei Temperaturen im Bereich von 25 °C bis 400 °C, insbesondere 50 °C bis 300 °C, betreibbar ist und/oder
wobei zwischen Carbonisierungseinrichtung (4) und Aktivierungseinrichtung (5) außerdem eine Klassiereinrichtung zum Klassieren des aus der Carbonisierungseinrichtung (4) stammenden Carbonisats vorgesehen ist.

9. Verfahren zur Herstellung von Aktivkohle, insbesondere durch Carbonisierung und nachfolgende Aktivierung polymerer organischer sulfonierter Ausgangsmaterialien, wobei das Verfahren die folgenden Verfahrensschritte umfaßt:
(a) Bereitstellung polymerer organischer Ausgangsmaterialien; dann
(b) gegebenenfalls Trocknung der Ausgangsmaterialien; nachfolgend
(c) gegebenenfalls Sulfonierung und/oder Peptisation der gegebenenfalls zuvor getrockneten Ausgangsmaterialien; anschließend
(d) Carbonisierung der gegebenenfalls zuvor getrockneten und/oder sulfonierten und/oder peptisierten Ausgangsmaterialien, wobei die Temperatur während der Carbonisierung geregelt und/oder gesteuert wird derart, daß die Carbonisierung in mindestens zwei Temperaturzonen mit jeweils voneinander verschiedenen Temperaturen mit stromaufwärts jeweils ansteigender Temperatur der einzelnen Temperaturstufen oder aber in einem Temperaturgradienten mit stromaufwärts ansteigendem Temperaturprofil durchgeführt wird; dann
(e) Aktivierung der zuvor carbonisierten Ausgangsmaterialien;
wobei sowohl die aus der Carbonisierung (d) als auch aus der Aktivierung (e) stammenden Abgase jeweils einer Abgasbehandlung unterworfen werden, wobei im Anschluß an die Carbonisierung eine Behandlung der bei der Carbonisierung gebildeten Abgase durchgeführt wird, wobei die Abgasbehandlung mindestens eine thermische Nachverbrennung umfaßt, und wobei im Anschluß an die Aktivierung eine Behandlung der bei der Aktivierung gebildeten Abgase durchgeführt wird, wobei die Abgasbehandlung mindestens eine thermische Nachverbrennung umfaßt, und wobei die Abgase, welche aus der Abgasbehandlung der bei der Aktivierung gebildeten Abgase stammen, zur Beheizung für die Aktivierung(seinrichtung) und/oder zur Aufheizung mindestens eines Aktivierungsgases und/oder für die Trocknung verwendet werden.

10. Verfahren nach einem der vorangehenden Ansprüche,
wobei die Carbonisierung in mindestens einem Drehrohr, insbesondere in mindestens einem Drehrohrofen, durchgeführt wird und/oder
wobei die Carbonisierung in einem geschlossenen System durchgeführt wird und/oder wobei die Carbonisierung unter inerten Bedingungen durchgeführt wird und/oder
wobei die Carbonisierung kontinuierlich oder quasikontinuierlich betrieben wird und/oder wobei die Temperatur während der Carbonisierung kontinuierlich oder stufenweise geregelt und/oder gesteuert wird und/oder
wobei die Temperatur während der Carbonisierung im Bereich von 20 °C bis 1.200 °C, insbesondere 30 °C bis 1.100 °C, vorzugsweise 50 °C bis 1.000 °C, geregelt und/oder gesteuert wird, insbesondere wobei eine erste, vorzugsweise am Einlaß oder in Verfahrensablaufrichtung am Beginn der Carbonisierung(seinrichtung) befindliche Temperaturzone im Bereich von 50 °C bis 500 °C, insbesondere 200 °C bis 450 °C, eingestellt wird und/oder insbesondere wobei eine weitere, vorzugsweise am Auslaß oder Ende der Carbonisierung(sein-richtung) befindliche Temperaturzone im Bereich von 800 °C bis 1.200 °C, insbesondere 850 °C bis 950 °C, eingestellt wird.

11. Verfahren nach einem der vorhergehenden Ansprüche, wobei die Carbonisierung in mindestens zwei Teilschritte unterteilt ist, insbesondere wobei ein erster, vorzugsweise stromaufwärts durchgeführter Teilschritt in einer beheizten Vibrationsrinne durchgeführt wird und ein zweiter, vorzugsweise stromabwärts zum ersten Abschnitt durchgeführter Teilschritt in einem Drehrohr, vorzugsweise in einem Drehrohrofen, insbesondere mit in Verfahrensablaufrichtung ansteigendem Temperaturprofil oder Temperaturgradienten, durchgeführt wird, insbesondere wobei der erste Teilschritt mit konstanter Temperatur oder mit in Verfahrensablaufrichtung ansteigendem Temperaturprofil oder Temperaturgradienten durchgeführt wird und/oder wobei der zweite Teilschritt mit in Verfahrensablaufrichtung ansteigendem Temperaturprofil oder Temperaturgradienten durchgeführt wird und/oder insbesondere wobei die Temperatur in dem in Verfahrensablaufrichtung ersten Teilschritt der Carbonisierung kontinuierlich oder stufenweise geregelt wird, insbesondere im Bereich von 50 °C bis 500 °C, vorzugsweise 200 °C bis 450 ° und/oder insbesondere wobei die Temperatur in dem in Verfahrensablaufrichtung zweiten Teilschritt der Carbonisierung in Verfahrensablaufrichtung ansteigend, insbesondere stufenweise oder stufenlos ansteigend, insbesondere in mehreren Temperaturzonen oder mit einem Temperaturgradienten ansteigend, geregelt wird, insbesondere im Bereich von 300 °C bis 1.200 °C, vorzugsweise 350 °C bis 950 °C.

12. Verfahren nach einem der vorangehenden Ansprüche, wobei während der Carbonisierung, vorzugsweise am Einlaß oder in Verfahrensablaufrichtung am Beginn der Carbonisierung(seinrichtung), insbesondere am Einlaß oder in Verfahrensablaufrichtung am Beginn des zweiten Abschnitts der Carbonisierungseinrichtung, Wasserdampf, insbesondere in Form eines Wasserdampf/Inertgas-Gemisches, eingesprüht oder eingedüst wird, insbesondere wobei der Anteil des Wasserdampfes in dem Wasserdampf/Inertgas-Gemisch im Bereich von 1 bis 30 Vol.-%, insbesondere 2 bis 20 Vol.-%, vorzugsweise 5 bis 15 Vol.-%, eingestellt wird, und/oder
wobei während der Carbonisierung, vorzugsweise am Auslaß oder in Verfahrensablaufrichtung am Ende der Carbonisierung(seinrichtung), Sauerstoff, insbesondere in Form eines Sauerstoffgemisches mit mindestens einem weiteren Gas, vorzugsweise in Form von Luft, eingetragen oder eingedüst wird, insbesondere wobei der eingetragene oder eingedüste Volumenstrom im Bereich von 10 bis 500 1/min, insbesondere 25 bis 250 1/min, vorzugsweise 50 bis 100 1/min, eingestellt wird und/oder
wobei im Anschluß an die Abgasbehandlung, insbesondere stromaufwärts zur thermischen Nachverbrennung, die aus der thermischen Nachverbrennung resultierenden Abgase, insbesondere mittels eines Wärmetauschers, abgekühlt werden, gegebenenfalls gefolgt von einer Trocknung der abgekühlten Abgase und gegebenenfalls wiederum gefolgt von einer Erwärmung der getrockneten Abgase.

13. Verfahren nach einem der vorhergehenden Ansprüche,
wobei die Aktivierung diskontinuierlich durchgeführt wird und/oder wobei die Aktivierung in einem geschlossenen System durchgeführt wird und/oder wobei die Aktivierung, insbesondere zu Beginn der Aktivierung und/oder zu Beginn der Autheizphase, unter inerten Bedingungen durchgeführt wird und/oder
wobei die Temperatur während der Aktivierung im Bereich von 300 °C bis 1.800 °C, insbesondere 400 °C bis 1.500 °C, vorzugsweise 500 °C bis 1.250 °C, eingestellt wird, insbesondere stufenlos und/oder kontinuierlich, vorzugsweise mittels einer Heizeinrichtung, insbesondere einer elektrisch betriebenen Heizung.

14. Verfahren nach einem der vorhergehenden Ansprüche, wobei während der Aktivierung mindestens ein Aktivierungsgas, insbesondere Wasserdampf und/oder Kohlendioxid und/oder Sauerstoff und/oder Ammoniak, eingetragen, insbesondere eingedüst und/oder eingeblasen, wird, insbesondere wobei das in die Aktivierung eingetragene Aktivierungsgas auf eine definierte Temperatur aufgeheizt wird und/oder insbesondere wobei während der Aktivierung als Aktivierungsgas wenigstens Wasserdampf, insbesondere in Form eines Wasserdampf/Inertgas-Gemisches, eingetragen, insbesondere eingedüst, eingesprüht und/oder eingeblasen, wird, insbesondere wobei der Anteil des Wasserdampfes in dem Wasscrdampf/Inertgas-Gemisch im Bereich von 5 bis 70 Vol.-%, insbesondere 10 bis 50 Vol.-%, vorzugsweise 15 bis 40 Vol.-%, eingestellt wird und/oder insbesondere wobei der Wasserdampf bei Temperaturen ab 500 °C eingedüst, eingesprüht und/oder eingeblasen wird und/oder insbesondere wobei während der Aktivierung als Aktivierungsgas, insbesondere zusätzlich zu Wasserdampf als Aktivierungsgas, Kohlendioxid, insbesondere in Form eines Kohlendioxid/Inertgas-Gemisches, eingetragen, insbesondere eingedüst, eingesprüht und/oder eingeblasen, wird, insbesondere wobei das Kohlendioxid bei Temperaturen ab 800 °C, eingedüst, eingesprüht und/oder eingeblasen wird und/oder insbesondere wobei das mindestens eine Aktivierungsgas über eine Einführeinrichtung aus einem Bevorratungsbehältnis in die Aktivierung eingespeist wird.

15. Verwendung einer Vorrichtung nach einem der Ansprüche 1 bis 8 zur Herstellung von Aktivkohle, insbesondere wobei die Herstellung der Aktivkohle durch Carbonisierung und nachfolgende Aktivierung polymerer organischer, vorzugsweise sulfonierter Ausgangsmaterialien erfolgt.

## Claims

1. A device (system) (1) for the production of activated charcoal, in particular by means of carbonation and subsequent activation of polymer organic sulfonated base materials, the device comprising
- optionally a drying unit (2) for drying the base materials,
- optionally a sulfonation unit (3) for sulfonating and/or peptization of the optionally previously dried base materials being disposed downstream of the optionally present drying unit (2),
- a carbonation unit (4) for carbonating the optionally previously dried, and/or sulfonated, and/or peptized base materials being disposed downstream of the optionally present drying unit (2), and/or to the optionally present sulfonation unit (3), wherein the temperature of the carbonation unit (4) may be controlled during operation such that at least two temperature zones are present at an upstream increasing temperature each of the individual temperature levels, or a temperature gradient with an upstream increasing temperature profile is present,
- an activation unit (5) being disposed downstream of the carbonation unit (4), for activating the base materials previously carbonated in the carbonation unit (4),
wherein the device (1) further comprises at least one exhaust gas treatment unit (4A, 4B, 4D) for treating the exhaust gases formed in the carbonation unit (4) during operation on one hand, and at least one exhaust gas treatment unit (5C, 5D) for the treatment of the exhaust gases formed in the activation unit (5) during operation on the other hand, wherein an exhaust gas treatment unit (4A, 4B, 4D) for the treatment of the exhaust gases formed in the carbonation unit (4) during operation is connected to and/or connected downstream of the carbonation unit (4), wherein the exhaust gas treatment unit (4A, 4B, 4D) comprises at least one thermal after-burning (4A), and wherein an exhaust gas unit (5C, 5D) for the treatment of the exhaust gases formed in the activation unit (5) during operation is connected to and/or connected downstream of the activation unit (5), wherein the exhaust gas treatment unit (5C, 5D) comprises at least one thermal after-burning (5C), and wherein the exhaust gasses coming from the exhaust gas treatment unit (5C, 5D) may be utilized for heating the activation unit (5), and/or for heating a storage container (5B) containing at least one activation gas, or at least one activation gas, and/or for heating the optionally present drying unit (2) via a feed line (5E).

2. The device according to claim 1,
wherein the carbonation unit (4) comprises at least one rotary tube, in particular at least one rotary kiln, and/or
wherein the carbonation unit (4) forms a closed system, and/or wherein the carbonation unit (4) may be operated under inert conditions, and/or
wherein the carbonation unit (4) may be operated in a continuous or quasi-continuous manner, and/or wherein the temperature of the carbonation unit (4) may be controlled continuously or gradually during operation, and/or
wherein the temperature of the carbonation unit (4) may be controlled from 20°C to 1,200°C, in particular 30°C to 1,100°C, preferably 50°C to 1,000°C, in particular wherein a first temperature zone, preferably located at the inlet or at the beginning of the carbonation unit (4) in process direction, may be set to within a range of 50°C to 500°C, in particular 200°C to 450°C, and/or in particular wherein a further temperature zone, preferably located at the outlet or at the end of the carbonation unit (4), may be set to within a range of 800°C to 1,200°C, in particular 850°C to 950°C.

3. The device according to claims 1 or 2, wherein the carbonation unit (4) is divided into at least two sections, in particular, wherein a first section, preferably disposed upstream, is formed by means of a heatable vibrating chute, and a second section, preferably disposed downstream of the first section, is formed by means of a rotary tube, preferably a rotary kiln, in particular having a temperature profile increasing in process direction, or temperature gradients, in the operating state, in particular wherein the first section is embodied such that it may be set to a constant temperature, or is embodied such that it may be controlled with a temperature profile increasing in process direction, or with temperature gradients, and/or in particular wherein the second section is embodied such that it may be controlled with a temperature profile increasing in process direction, or with temperature gradients, and/or in particular wherein the temperature in the first section of the carbonation direction (4) may be controlled in a continuous or gradual manner in process direction, in particular within a range of 50°C to 500°C, preferably 200°C to 450°C, and/or in particular wherein the temperature in the second section of the carbonation unit (4) in process direction may be controlled in a manner increasing in process direction, in particular in a gradually or continuously increasing manner, in particular increasing in multiple temperature zones or with a temperature gradient, in particular within a range of 300°C to 1,200°C, preferably 350°C to 950°C.

4. The device according to one of the previous claims,
wherein the carbonation unit (4) has an injection or spray unit for injecting or spraying water vapor, in particular in the form of a water vapor/inert gas mixture, preferably at the inlet, or in process direction at the beginning of the carbonation unit (4), in particular at the inlet, or in process direction at the beginning of the second section of the carbonation unit (4), in particular wherein the proportion of the water vapor in the water vapor/inert gas mixture may be set to within a range of 1 to 30 vol.-%, in particular 2 to 20 vol.-%, preferably 5 to 15 vol.-%, and/or
wherein the carbonation unit (4) has an injection unit for incorporating oxygen, in particular in the form of an oxygen mixture, having at least one additional gas, preferably in the form of air, preferably at the outlet, or in process direction at the end of the carbonation unit (4), in particular wherein the sprayed in volume stream may be set to within a range of 10 to 500 l/min, in particular 25 to 250 l/min, preferably 50 to 100 I/min.

5. The device according to one of the previous claims,
wherein the exhaust gas treatment unit (4A, 4B, 4D), in particular upstream of the thermal after-burning (4A), has at least one heat exchanger for cooling the exhaust gases resulting from the thermal after-burning, with an optional drying unit connected downstream thereof for drying the cooled exhaust gases, and optionally a heating unit, also connected downstream of the same for heating the dried exhaust gases, and/or
wherein the exhaust gas treatment unit (4A, 4B, 4D) comprises an oxidation unit (4B) for the preferably catalytic oxidation of sulfur oxides contained in the exhaust gases formed in the carbonation unit (4) during operation, in particular sulfur dioxide, into sulfur trioxide, preferably connected downstream of the thermal after-burning (4A) and the optionally provided heat exchanger, drying unit, and/or heating unit, in particular wherein the oxidation unit (4B) has at least one oxidation catalyst, preferably on the basis of vanadium and/or platinum, and/or in particular wherein the oxidation unit (4B) has a return unit (4C) for returning the sulfur trioxide to the sulfonation unit (3), optionally via an interconnected production unit for the sulfonation agent, in particular wherein the one oxidation unit (4B) has a separating unit for separating the sulfur trioxide from the remaining components of the exhaust gases, in particular carbon dioxide, and/or water vapor, and/or nitrogen oxide, in particular wherein a scrubber (4D) is provided for scrubbing the separated remaining components of the exhaust gases.

6. The device according to one of the previous claims,
wherein the activation unit (5) may be operated discontinuously, and/or
wherein the activation unit (5) forms a closed system, and/or
wherein the activation unit (5) may be operated under inert conditions, in particular at the beginning of the activation, and/or at the beginning of the heating phase, and/or
wherein the temperature of the activation unit (5) may be controlled during operation within a range of 300°C to 1,800°C, in particular 400°C to 1,500°C, preferably 500°C to 1,250°C, in particular in a continuously variable, and/or continuous manner, in particular wherein the activation unit (5) has at least one heating unit, in particular an electrically operated heater.

7. The device according to one of the previous claims, wherein the activation unit (5) has at least one insertion unit (5A) for incorporating, in particular for spraying in and/or injecting, at least one activation gas, in particular water vapor and/or carbon dioxide, and/or oxygen, and/or ammonia, in particular wherein the insertion unit (5A) has at least one temperature control unit for adjusting the activation gas to be incorporated into the activation unit (5), in particular wherein the insertion unit (5A) has at least one insertion unit for incorporating, in particular for spraying in, injecting, and/or blow in water vapor, in particular in the form of a water vapor/inert gas mixture, in particular wherein the proportion of the water vapor in the water vapor/inert gas mixture may be set to within a range of 5 to 70 vol.-%, in particular 10 to 50 vol.-%, preferably 15 to 40 vol.-%, and/or in particular wherein the water vapor may be sprayed in, injected, and/or blown in at temperatures from 500°C, and/or in particular wherein the insertion unit (5A) hat at least one insertion unit for incorporating, in particular for spraying, injecting, and/or blowing in carbon dioxide, in particular in the form of a carbon dioxide/inert gas mixture, in particular wherein the carbon dioxide may be sprayed in, injected, and/or blown in at temperatures from 800°C, and/or in particular wherein the insertion unit (5A) is supplied by, and/or is connected to at least one storage container (5B) containing at least one activation gas.

8. The device according to one of the previous claims,
wherein the drying unit (2) may be operated in a fluidized bed, and/or wherein the drying unit (2), in particular the fluidized bed thereof, may be operated and/or heated by means of exhaust gases coming from the exhaust gas treatment unit (5C, 5D), in particular from the thermal after-burning (5C), and/or
wherein the drying unit (2) may be operated in a discontinuous manner, and/or
wherein the drying unit (2) may be operated at temperatures in a range of 100°C to 400°C, in particular 100°C to 200°C, and/or
wherein the sulfonation unit (3) may be operated in a discontinuous manner, and/or
wherein the sulfonation unit (3) may be operated at temperatures in a range of 25°C to 400°C, in particular 50°C to 300°C, and/or
wherein furthermore a classification unit is provided between the carbonation unit (4) and the activation unit (5) for classifying the carbonation product coming from the carbonation unit (4).

9. A method for the production of activated charcoal, in particular by means of carbonation and subsequent activation of polymer organic sulfonated base materials, the method comprising the following process steps:
(a) providing polymer organic base materials; then
(b) optionally the drying of the base materials; subsequently
(c) optionally the sulfonation and/or peptization of the optional previously dried base materials; subsequently
(d) the carbonation of the optional previously dried, and/or sulfonated, and/or peptized base materials, wherein the temperature during the carbonation is controlled and/or regulated such that the carbonation is carried out in at least two temperature zones, each having temperatures that are different from each other, each with an upstream increasing temperature of the individual temperature stages, or with upstream increasing temperature profile in a temperature gradient; then
(e) activation of the previously carbonized base materials;
wherein the exhaust gases coming both from the carbonation (d) and the activation (e) are each subjected to an exhaust gas treatment, wherein subsequent to the carbonation a treatment of the exhaust gases formed during the carbonation is carried out, wherein the exhaust gas treatment comprises at least one thermal after-burning, and wherein subsequent to the activation a treatment of the exhaust gases formed during the activation is carried out, wherein the exhaust gas treatment comprises at least one thermal after-burning, and wherein the exhaust gases coming from the exhaust gas treatment of the exhaust gases formed during the activation are used for heating of the activation (unit), and/or for heating of the at least one activation gas, and/or for the drying.

10. The method according to one of the previous claims,
wherein the carbonation is carried out in at least one rotary tube, in particular in at least one rotary kiln, and/or
wherein the carbonation is carried out in a closed system, and/or wherein the carbonation is carried out under inert conditions, and/or
wherein the carbonation is operated in a continuous or quasi-continuous manner, and/or wherein the temperature is controlled and/or regulated continuously or gradually during carbonation, and/or
wherein the temperature is controlled and/or regulated during the carbonation within a range of 20°C to 1,200°C, in particular 30°C to 1,100°C, preferably 50°C to 1,000°C, in particular wherein a first temperature zone, preferably located at the inlet or in process direction at the beginning of the carbonation (unit), is set to within a range of 50°C to 500°C, in particular 200°C to 450°C, and/or in particular wherein a further temperature zone, preferably located at the outlet or the end of the carbonation (unit) is set to within a range of 800°C to 1,200°C, in particular 850°C to 950°C.

11. The method according to one of the previous claims, wherein the carbonation is divided into at least two partial steps, in particular wherein a first partial step carried out preferably upstream in a heated vibrating chute, and a second partial step is preferably carried out downstream of the first section, in a rotary tube, preferably in a rotary kiln, in particular with a temperature profile increasing in process direction, or with temperature gradients, in particular wherein the first partial step is carried out at a constant temperature, or with a temperature profile increasing in process direction, or with temperature gradients, and/or wherein the second partial step is carried out with a temperature profile increasing in process direction, or with temperature gradients, and/or in particular wherein the temperature is controlled continuously or gradually in the first partial step of the carbonation in process direction, in particular within a range of 50°C to 500°C, preferably 200°C to 450°C, and/or in particular wherein the temperature is controlled in the second partial step of the carbonation in process direction in a manner increasing in process direction, in particular increasing gradually or continuously, in particular in multiple temperature zones, or increasing with a temperature gradient, in particular within a range of 300°C to 1,200°C, preferably 350°C to 950°C.

12. The method according to one of the previous claims, wherein during the carbonation water vapor, in particular in the form of a water vapor/inert gas mixture, is injected or sprayed in, preferably at the inlet or in process direction at the beginning of the carbonation (unit), in particular at the inlet or in process direction at the beginning of the second section of the carbonation unit, in particular wherein the proportion of the water vapor in the water vapor/inert gas mixture is set to within a range of 1 to 30 vol.-%, in particular 2 to 20 vol.-%, preferably 5 to 15 vol.-%, and/or
wherein during the carbonation oxygen, in particular in the form of an oxygen mixture having at least one additional gas, preferably in the form of air, is incorporated or injected, preferably at the outlet or in process direction at the end of the carbonation (unit), in particular wherein the incorporated or injected volume stream is set to within a range of 10 to 500 l/min, in particular 25 to 250 l/min, preferably 50 to 100 l/min, and/or
wherein subsequent to the exhaust gas treatment, in particular upstream of the thermal after-burning, the exhaust gases resulting from the thermal after-burning are cooled, in particular by means of a heat exchanger, optionally followed by the drying of the cooled exhaust gases, and optionally in turn followed by a heating of the dried exhaust gases.

13. The method according to one of the previous claims,
wherein the activation is carried out in a discontinuous manner, and/or
wherein the activation is carried out in a closed system, and/or wherein the activation is carried out under inert conditions, in particular at the beginning of the activation, and/or at the beginning of the heating phase, and/or
wherein the temperature is set to within a range of 300°C to 1,800°C, in particular 400°C to 1,500°C, preferably 500°C to 1,250°C during the activation, in particular in a gradual and/or continuous manner, preferably by means of a heating unit, in particular an electrically operated heater.

14. The method according to one of the previous claims, wherein during the activation at least one activation gas, in particular water vapor, and/or carbon dioxide, and/or oxygen, and/or ammonia, is incorporated, in particular injected, and/or blown in, in particular, wherein the activation gas being incorporated into the activation is heated to a defined temperature, and/or in particular wherein during the activation at least water vapor, in particular in the form of a water vapor/inert gas mixture, is incorporated, in particular sprayed in, injected, and/or blown in as the activation gas, in particular wherein the proportion of the water vapor in the water vapor/inert gas mixture is set to within a range of 5 to 70 vol.-%, in particular 10 to 50 vol.-%, preferably 15 to 40 vol.-%, and/or in particular wherein the water vapor is sprayed in, injected, and/or blown in at temperatures from 500°C, and/or in particular wherein during the activation, carbon dioxide, in particular in the form of a carbon dioxide/inert gas mixture, is incorporated, in particular sprayed in, injected, and/or blown in as the activation gas, in particular in addition to the water vapor as the activation gas, in particular wherein the carbon dioxide is sprayed in, injected, and/or blown in at temperatures from 800°C, and/or in particular wherein the at least one activation gas is supplied to the activation from a storage container via an insertion unit.

15. A use of a device according to one of the claims 1 to 8 for the production of activated charcoal, in particular wherein the production of the activated charcoal is carried out by means of carbonation and subsequent activation of polymer, organic, preferably sulfonated base materials.

## Revendications

1. Dispositif (installation) (1) pour produire du charbon actif, en particulier par carbonisation suivie de l'activation de matériaux de départ polymères, organiques sulfonés, le dispositif comprenant
- le cas échéant un dispositif de séchage (2) pour le séchage des matériaux de départ,
- le cas échéant, un dispositif de sulfonation (3) pour la sulfonation et/ou la peptisation des matériaux de départ séchés le cas échéant auparavant, disposé en aval du dispositif de séchage (2) présent le cas échéant,
- un dispositif de carbonisation (4) pour la carbonisation des matériaux de départ séchés et/ou sulfonés et/ou peptisé le cas échéant auparavant, disposé en aval du dispositif de séchage (2) présent le cas échéant et/ou du dispositif de sulfonation (3) présent le cas échéant, la température du dispositif de carbonisation (4) en service étant réglable, de telle sorte qu'il y ait au moins deux zones de température avec une température des différents étages de température croissant vers l'amont, ou encore qu'il y ait un profil de température croissant vers l'amont,
- un dispositif d'activation (5) disposé en aval du dispositif de carbonisation (4) pour l'activation des matériaux de départ précédemment carbonisés dans le dispositif de carbonisation (4),
le dispositif (1) comportant en outre d'une part au moins un dispositif de traitement des gaz sortants (4A, 4B, 4D) pour le traitement des gaz sortants formés en service dans le dispositif de carbonisation (4), et d'autre part au moins un dispositif de traitement des gaz sortants (5C, 5D) pour le traitement des gaz sortants formés en service dans le dispositif d'activation (5), un dispositif de traitement des gaz sortants (4A, 4B, 4D) étant branché et/ou monté en aval du dispositif de carbonisation (4) pour le traitement des gaz sortants formés en service dans le dispositif de carbonisation (4), le dispositif de traitement des gaz sortants (4A, 4B, 4D) comprenant au moins une postcombustion thermique (4A) et un dispositif de traitement des gaz sortants (5C, 5D) étant branché et/ou monté en aval du dispositif d'activation (5) pour le traitement des gaz sortants formés en service dans le dispositif d'activation (5), le dispositif de traitement des gaz sortants (5C, 5D) comprenant au moins une postcombustion thermique (5C) et les gaz sortants provenant du dispositif de traitement des gaz sortants (5C, 5D) étant utilisables pour le chauffage du dispositif d'activation (5) et/ou via une conduite d'amenée (5E) pour le chauffage d'un récipient de réserve (5B) contenant au moins un gaz d'activation et/ou pour le chauffage du dispositif de séchage (2) présent le cas échéant.

2. Dispositif selon la revendication 1, dans lequel le dispositif de carbonisation (4) comprend au moins un tube tournant, en particulier au moins un four tubulaire tournant, et/ou dans lequel le dispositif de carbonisation (4) forme un système fermé et/ou dans lequel le dispositif de carbonisation (4) peut être exploité sous des condition inertes et/ou
dans lequel le dispositif de carbonisation (4) peut être exploité de façon continue ou quasi-continue, et/ou dans lequel la température du dispositif de carbonisation (4) peut être régulée en service continûment ou par gradins, et/ou
dans lequel la température du dispositif de carbonisation (4) peut être régulée en service dans l'intervalle de 20 °C à 1200 °C, en particulier de 30 °C à 1100 °C, de préférence de 50 °C à 1000 °C, en particulier dans lequel une première zone de température, se trouvant de préférence à l'entrée ou dans le sens du déroulement du processus au début du dispositif de carbonisation (4), peut être réglée en service dans l'intervalle de 50 °C à 500 °C, en particulier de 200 °C à 450 °C et/ou en particulier dans lequel une autre zone de température, se trouvant de préférence à la sortie ou à l'extrémité du dispositif de carbonisation (4), peut être réglée en service dans l'intervalle de 800 °C à 1200 °C, en particulier de 850 °C à 950 °C.

3. Dispositif selon la revendication 1 ou 2, dans lequel le dispositif de carbonisation (4) est subdivisé en au moins deux sections, en particulier dans lequel une première section, disposée de préférence en amont, est formée par une rigole vibrante pouvant être chauffée et une deuxième section, disposée de préférence en aval de la première section, est formée par un tube tournant, de préférence un four tubulaire tournant, en particulier avec un profil de température ou un gradient de température croissant dans l'état en service dans le sens du déroulement du processus, en particulier dans lequel la première section est configurée réglable avec une température constante ou est configurée de sorte à pouvoir être régulée avec un profil de température ou un gradient de température croissant dans le sens du déroulement du processus, et/ou en particulier dans lequel la deuxième section avec le profil de température ou le gradient de température croissant dans le sens du déroulement du processus est configurée de façon à pouvoir être régulée, et/ou en particulier dans lequel la température dans la première section du dispositif de carbonisation (4), dans le sens du déroulement du processus, peut être régulée continûment ou par gradins, en particulier dans l'intervalle de 50 °C à 500 °C, de préférence de 200 °C à 450 °C, et/ou en particulier dans lequel la température dans la deuxième section du dispositif de carbonisation (4), dans le sens du déroulement du processus, peut être régulée de façon à croître dans le sens du déroulement du processus, en particulier de façon à croître par gradins ou continûment, croissant en particulier dans plusieurs zones de température ou avec un gradient de température, en particulier dans l'intervalle de 300 °C à 1200 °C, de préférence de 350 °C à 950 °C.

4. Dispositif selon l'une quelconque des revendications précédentes,
dans lequel le dispositif de carbonisation (4) comporte de préférence à l'entrée ou dans le sens du déroulement du processus au début du dispositif de carbonisation (4), de préférence à l'entrée ou dans le sens du déroulement du processus au début de la deuxième section du dispositif de carbonisation (4), un dispositif de pulvérisation ou d'injection pour la pulvérisation ou l'injection de vapeur d'eau, en particulier sous la forme d'un mélange de vapeur d'eau et de gaz inerte, la proportion de vapeur d'eau dans le mélange de vapeur d'eau et de gaz inerte pouvant en particulier être réglée dans l'intervalle de 1 à 30 % en volume, en particulier de 2 à 20 % en volume, de préférence de 5 à 15 % en volume, et/ou
dans lequel le dispositif de carbonisation (4) comporte de préférence à la sortie ou dans le sens du déroulement du processus à la fin du dispositif de carbonisation (4), un dispositif d'injection pour l'introduction d'oxygène, en particulier sous la forme d'un mélange de l'oxygène avec au moins un autre gaz, de préférence sous forme d'air, le débit volumique insufflé étant réglable en particulier dans l'intervalle de 10 à 500 l/min, en particulier de 25 à 250 l/min, de préférence de 50 à 100 l/min.

5. Dispositif selon l'une quelconque des revendications précédentes,
dans lequel le dispositif de traitement des gaz sortants (4A, 4B, 4D) comporte en particulier en amont de la postcombustion thermique (4A) au moins un échangeur de chaleur pour refroidir le gaz sortant résultant de la postcombustion thermique, le cas échéant un dispositif de séchage branché en aval de ce dernier, pour le séchage des gaz sortants refroidis et, le cas échéant encore en aval de ce dernier, un dispositif de réchauffage pour le réchauffage des gaz sortants séchés, et/ou
dans lequel le dispositif de traitement des gaz sortants (4A, 4B, 4D) comprend un dispositif d'oxydation (4B) pour l'oxydation de préférence catalytique des oxydes de soufre contenus dans les gaz sortants formés en service dans le dispositif de carbonisation (4), en particulier du dioxyde de soufre en trioxyde de soufre, de préférence en aval de la postcombustion thermique (4A) et de l'échangeur de chaleur, du dispositif de séchage et/ou du dispositif de chauffage prévus le cas échéant, le dispositif d'oxydation (4B) comportant en particulier au moins un catalyseur d'oxydation, de préférence à base de vanadium et/ou de platine, et/ou le dispositif d'oxydation (4B) comprenant en particulier un dispositif de recyclage (4C) pour le recyclage du trioxyde de soufre dans le dispositif de sulfonation (3), le cas échéant par l'intermédiaire d'un dispositif de préparation intercalé pour l'agent de sulfonation, le dispositif d'oxydation (4B) comportant en particulier un dispositif de séparation pour séparer le trioxyde de soufre des autres composants des gaz sortants, en particuliers des oxydes du carbone et/ou de la vapeur d'eau et/ou des oxydes d'azote, un laveur (4D) étant en particulier prévu en aval du dispositif de séparation pour le lavage des autres composants séparés des gaz sortants.

6. Dispositif selon l'une quelconque des revendications précédentes,
dans lequel le dispositif d'activation (5) peut être exploité de façon discontinue et/ou
dans lequel le dispositif d'activation (5) forme un système fermé et/ou
dans lequel le dispositif d'activation (5) peut être exploité sous des conditions inertes, en particulier au début de l'activation et/ou au début de la phase de chauffage, et/ou
dans lequel la température du dispositif d'activation (5) peut être régulée en service dans l'intervalle de 300 °C à 1800 °C, en particulier de 400 °C à 1500 °C, de préférence de 500 °C à 1250 °C, en particulier sans créneaux et/ou continûment, le dispositif d'activation (5) comportant en particulier au moins un dispositif de chauffage, en particulier un dispositif de chauffage à fonctionnement électrique.

7. Dispositif selon l'une quelconque des revendications précédentes, dans lequel le dispositif d'activation (5) comporte au moins un dispositif d'introduction (5A) pour introduire, en particulier par injection et/ou par insufflation, au moins un gaz d'activation, en particulier de la vapeur d'eau et/ou du dioxyde de carbone et/ou de l'oxygène et/ou de l'ammoniac, le dispositif d'introduction (5A) comportant en particulier au moins un dispositif de commande de température pour le réglage du gaz d'activation à introduire dans le dispositif d'activation (5), le dispositif d'introduction (5A) comportant en particulier au moins un dispositif d'introduction pour introduire de la vapeur d'eau, en particulier par injection, par pulvérisation ou par insufflation, en particulier sous la forme d'un mélange de vapeur d'eau et de gaz inerte, la proportion de la vapeur d'eau dans le mélange de vapeur d'eau et de gaz inerte étant en particulier réglable dans l'intervalle de 5 à 70 % en volume, en particulier de 10 à 50 % en volume, de préférence de 15 à 40 % en volume, et/ou la vapeur d'eau pouvant être introduite à des températures à partir de 500 °C en particulier par injection, par pulvérisation et/ou par insufflation, et/ou le dispositif d'introduction (5A) comportant en particulier au moins un dispositif d'introduction pour introduire, en particulier par injection, par pulvérisation et/ou par insufflation, du dioxyde de carbone, en particulier sous la forme d'un mélange de dioxyde de carbone et de gaz inerte, le dioxyde de carbone pouvant être introduit en particulier à des températures à partir de 800 °C par injection, par pulvérisation et/ou par insufflation, et/ou le dispositif d'introduction (5A) étant alimenté en particulier depuis au moins un récipient de réserve (5B), lequel contient ledit au moins un gaz d'activation, ou lui étant raccordé.

8. Dispositif selon l'une quelconque des revendications précédentes,
dans lequel le dispositif de séchage (2) peut être exploité dans un lit fluidisé et/ou le dispositif de séchage (2), en particulier son lit fluidisé, pouvant être exploité et/ou chauffé au moyen des gaz sortants provenant du dispositif de traitement des gaz sortants (5C, 5D), en particulier provenant de la postcombustion thermique (5C), et/ou
dans lequel le dispositif de séchage (2) peut être exploité de façon discontinue et/ou le dispositif de séchage (2) peut être exploité à des températures dans l'intervalle de 100 °C à 400 °C, en particulier de 100 °C à 200 °C, et/ou
dans lequel le dispositif de sulfonation (3) peut être exploité de façon discontinue et/ou le dispositif de sulfonation (3) peut être exploité à des températures dans l'intervalle de 25 °C à 400 °C, en particulier de 50 °C à 300 °C, et/ou
dans lequel un dispositif de triage est prévu en outre entre le dispositif de carbonisation (4) et le dispositif d'activation (5) pour trier le produit carbonisé provenant du dispositif de carbonisation (4).

9. Procédé pour produire du charbon actif, en particulier par carbonisation suivie de l'activation de matériaux de départ polymères, organiques sulfonés, le procédé comprenant les étapes de procédé suivantes :
(a) mise à disposition de matériaux de départ polymères organiques ; puis
(b) le cas échéant, séchage des matériaux de départ ; ensuite
(c) le cas échéant sulfonation et/ou peptisation des matériaux de départ séchés auparavant le cas échéant ; ensuite
(d) carbonisation des matériaux de départ séchés et/ou sulfonés et/ou peptisés auparavant le cas échéant, la température pendant la carbonisation étant régulée et/ou commandée de telle sorte que la carbonisation soit effectuée dans au moins deux zones de température, avec des températures différant respectivement l'une de l'autre, avec une température des différents étages de température croissant dans le sens de l'amont, ou encore dans un gradient de température avec un profil de température croissant dans le sens de l'amont ; puis
(e) activation des matériaux de départ précédemment carbonisés ;
sachant qu'aussi bien les gaz de sortie provenant de la carbonisation (d) que ceux provenant de l'activation (e) sont soumis chacun à un traitement des gaz de sortie, un traitement des gaz formés lors de la carbonisation étant effectué à la suite de la carbonisation, le traitement des gaz de sortie comprenant au moins une postcombustion thermique, et un traitement des gaz formés lors de l'activation étant effectué à la suite de l'activation, le traitement des gaz de sortie comprenant au moins une postcombustion thermique, et les gaz de sortie qui proviennent du traitement des gaz de sortie formés lors de l'activation étant utilisés au chauffage pour l'activation (le dispositif d'activation) et/ou au réchauffage d'au moins un gaz d'activation et/ou au séchage.

10. Procédé selon l'une quelconque des revendications précédentes,
dans lequel la carbonisation est effectuée dans au moins un tube tournant, en particulier dans au moins un four tubulaire tournant et/ou
dans lequel la carbonisation est effectuée dans un système fermé, et/ou la carbonisation est effectuée sous des conditions inertes, et/ou
dans lequel la carbonisation est effectuée continûment ou quasi-continûment, et/ou la température est réglée et/ou est commandée et/ou régulée continûment ou par gradins pendant la carbonisation, et/ou
dans lequel la température est régulée ou commandée pendant la carbonisation dans l'intervalle de 20 °C à 1200 °C, en particulier de 30 °C à 1100 °C, de préférence de 50 °C à 1000 °C, une première zone de température, se trouvant en particulier de préférence à l'entrée ou, dans le sens du déroulement du processus, au début de la carbonisation (du dispositif de carbonisation), étant réglée dans l'intervalle de 50 °C à 500 °C, en particulier de 200 °C à 450 °C, et/ou en particulier une deuxième zone de température, se trouvant en particulier de préférence à la sortie ou à la fin de la carbonisation (à l'extrémité du dispositif de carbonisation), étant réglée dans l'intervalle de 800 °C à 1200 °C, en particulier de 850 °C à 950 °C.

11. Procédé selon l'une quelconque des revendications précédentes, dans lequel la carbonisation est subdivisée en au moins deux étapes partielles, une première étape partielle en particulier, effectuée en amont, s'effectuant dans une rigole vibrante chauffante, et une deuxième étape partielle, effectuée de préférence en aval de la première section dans un tube tournant, s'effectuant de préférence dans un four tubulaire tournant, en particulier avec un profil de température ou un gradient de température croissant dans le sens du déroulement du processus, la première étape partielle étant effectuée en particulier à température constante ou sous un profil de température ou un gradient de température croissant dans le sens du déroulement du processus, et/ou la deuxième étape partielle étant effectuée sous un profil de température ou un gradient de température croissant dans le sens du déroulement du processus, et/ou la température dans la première étape partielle de la carbonisation dans le sens du déroulement du processus étant en particulier régulée continûment ou par gradins, en particulier dans l'intervalle de 50 °C à 500 °C, de préférence de 200 °C à 450 °C, et/ou la température dans la deuxième étape partielle de la carbonisation dans le sens du déroulement du processus étant en particulier régulée de façon à croître dans le sens du déroulement du processus, en particulier de façon à croître par gradins ou continûment, en particulier en plusieurs zones de température ou avec un gradient de température croissant, en particulier dans l'intervalle de 300 °C à 1200 °C, de préférence de 350 °C à 950 °C.

12. Procédé selon l'une quelconque des revendications précédentes, dans lequel, pendant la carbonisation, de préférence à l'entrée ou au début de la carbonisation (du dispositif de carbonisation) dans le sens du déroulement du processus, en particulier à l'entrée ou au début de la deuxième section du dispositif de carbonisation dans le sens du déroulement du processus, de la vapeur d'eau est pulvérisée ou injectée, en particulier sous la forme d'un mélange de vapeur d'eau et de gaz inerte, la proportion de la vapeur d'eau dans le mélange de vapeur d'eau et de gaz inerte étant réglée en particulier dans l'intervalle de 1 à 30 % en volume, en particulier de 2 à 20 % en volume, de préférence de 5 à 15 % en volume, et/ou
dans lequel, pendant la carbonisation, de préférence à la sortie ou dans le sens du déroulement du processus à la fin de la carbonisation (à l'extrémité du dispositif de carbonisation), de l'oxygène, en particulier sous la forme d'un mélange de l'oxygène avec au moins un autre gaz, de préférence sou la forme d'air, est introduit ou insufflé, le débit volumique introduit ou insufflé étant réglé en particulier dans l'intervalle de 10 à 500 I/min, en particulier de 25 à 250 I/min, de préférence de 50 à 100 I/min, et/ou
dans lequel, à la suite du traitement des gaz sortants, en particulier en amont de la postcombustion thermique, les gaz sortants résultant de la postcombustion thermique sont refroidis, en particulier au moyen d'un échangeur de chaleur, l'opération étant suivie le cas échéant d'un séchage des gaz refroidis, lui-même suivi le cas échéant d'un réchauffage des gaz sortants séchés.

13. Procédé selon l'une quelconque des revendications précédentes,
dans lequel l'activation est effectuée de façon discontinue et/ou
dans lequel l'activation est effectuée dans un système fermé et/ou l'activation est effectuée, en particulier au début de l'activation et/ou au début de la phase de réchauffage, sous des conditions inertes, et/ou
dans lequel la température pendant l'activation est réglée dans l'intervalle de 300 °C à 1800 °C, en particulier de 400 °C à 1500 °C, de préférence de 500 °C à 1250 °C, en particulier sans gradins et/ou continûment, en particulier au moyen d'un dispositif de chauffage, en particulier d'un dispositif de chauffage à fonctionnement électrique.

14. Procédé selon l'une quelconque des revendications précédentes, dans lequel au moins un gaz d'activation, en particulier de la vapeur d'eau et/ou du dioxyde de carbone et/ou de l'oxygène et/ou de l'ammoniac, est introduit pendant l'activation, en particulier injecté ou insufflé, le gaz d'activation introduit dans l'activation étant en particulier chauffé à une température définie, et/ou au moins de la vapeur d'eau étant en particulier introduite pendant l'activation comme gaz d'activation, en particulier injectée, pulvérisée et/ou insufflée, en particulier sous la forme d'un mélange de vapeur d'eau et de gaz inerte, la proportion de vapeur d'eau dans le mélange de vapeur d'eau et de gaz inerte étant réglée en particulier dans l'intervalle de 5 à 70 % en volume, en particulier de 10 à 50 % en volume, de préférence de 15 à 40 % en volume, et/ou la vapeur d'eau pouvant être introduite à des températures à partir de 500 °C en particulier par injection, par pulvérisation et/ou par insufflation, et/ou du dioxyde de carbone étant introduit pendant l'activation comme gaz d'activation, en particulier en plus de la vapeur d'eau comme gaz d'activation, en particulier sous la forme d'un mélange de dioxyde de carbone et de gaz inerte, en particulier par injection, par pulvérisation et/ou par insufflation, le dioxyde de carbone étant introduit en particulier à des températures à partir de 800 °C par injection, par pulvérisation et/ou par insufflation, et/ou ledit au moins un gaz d'activation étant amené en particulier dans l'activation depuis un récipient de réserve par l'intermédiaire d'un dispositif d'introduction.

15. Utilisation d'un dispositif selon l'une quelconque des revendications 1 à 8 pour la préparation de charbon actif, la préparation du charbon actif s'effectuant en particulier par carbonisation de matériaux de départ polymères, organiques, de préférence sulfonés, suivie d'une activation.
